# EUROPEAN PATENT APPLICATION

(11) **EP 4 568 409 A1**
(43) Date of publication of application: **11.06.2025**
(21) Application number: 23856306.8
(22) Date of filing: 30.06.2023
(51) Int. Cl.: H04W 76/12

(54) **COMMUNICATION METHOD AND APPARATUS, AND DEVICE**

(30) Priority: 26.08.2022 CN 202211033745
(71) Applicant: Huawei Technologies Co., Ltd., Shenzhen, Guangdong 518129 (CN)
(72) Inventor: LIU, Shifa, Shenzhen, Guangdong 518129 (CN); TAO, Zhenyu, Shenzhen, Guangdong 518129 (CN)
(74) Representative: Gill Jennings & Every LLP
(86) International application number: PCT/CN2023/104995
(87) International publication number: WO 2024/041216

(57) **Abstract**

This application discloses a communication method, apparatus, and device. The method includes: After receiving a first message from a first device, a first relay device may send a second message to a second device based on the first message. The first message includes indication information of the second device, or there is a correspondence between a destination address in the first message and the second device. The first device is a session management network element, and the second device is a user plane network element; or the first device is the user plane network element, and the second device is the session management network element. In this solution, the session management network element may interact with the user plane network element via the first relay device, so that reliability of communication between the session management network element and the user plane network element can be improved.

## Description

### CROSS-REFERENCE TO RELATED APPLICATIONS

This application claims priority to Chinese Patent Application No. 202211033745.9, filed with the China National Intellectual Property Administration on August 26, 2022 and entitled "COMMUNICATION METHOD, APPARATUS, AND DEVICE", which is incorporated herein by reference in its entirety.

### TECHNICAL FIELD

This application relates to the field of communication technologies, and in particular, to a communication method, apparatus, and device.

### BACKGROUND

With development of mobile communication, an application field of a mobile communication system extends from an enhanced mobile broadband (Enhanced Mobile Broadband, eMBB) field to a massive machine-type communications (Massive Machine-Type Communications, mMTC) field, an ultra-reliable and low-latency communications (Ultra-Reliable and Low-Latency Communications, uRLLC) field, and other fields, and the mobile communication system needs to be applied to scenarios such as an internet of vehicles, cloud augmented reality (Augmented Reality, AR)/virtual reality (Virtual Reality, VR), cloud gaming, an uncrewed aerial vehicle, high-definition live broadcast, and industrial control. These application fields and scenarios impose higher requirements on a network capability of the mobile communication system, a lower service latency is required, and an N4 interface between a user plane network element (User Plane Function, UPF) and a session management network element (Session Management Function, SMF) is also required to provide higher secure access and management capabilities.

Currently, control signaling may be transmitted between the SMF and the UPF through the N4 interface, to manage a session. However, if a connection on the N4 interface is interrupted, signaling transmission between the SMF and the UPF fails, reducing reliability of communication between the SMF and the UPF. In addition, if the signaling transmission between the SMF and the UPF fails, a corresponding session may also be deleted. Consequently, a user service is interrupted, and service continuity is affected.

### SUMMARY

This application provides a communication method, apparatus, and device, to improve reliability of communication between an SMF and a UPF.

According to a first aspect, an embodiment of this application provides a communication method. The method includes: After receiving a first message from a first device, a first relay device may send a second message to a second device based on the first message. The first message includes indication information of the second device, or there is a correspondence between a destination address in the first message and the second device. The first device is a session management network element, and the second device is a user plane network element; or the first device is the user plane network element, and the second device is the session management network element.

According to the method, the session management network element may interact with the user plane network element via the first relay device. In this way, even if a link between the session management network element and the user plane network element is interrupted or a route is faulty, communication between the session management network element and the user plane network element is not interrupted, thereby improving reliability of the communication between the session management network element and the user plane network element, and improving service continuity.

In a possible design, a source address and the destination address in the first message are respectively an address of the first device and a first address of the first relay device; and a source address and a destination address in the second message are respectively a second address of the first relay device and an address of the second device. According to this design, two communication ends (namely, the session management network element and the user plane network element) do not know the addresses of each other, so that topology hiding can be implemented, and communication security is improved.

In a possible design, the first message includes a first identifier, and the second message includes a second identifier; or the first message includes the first identifier, and the second message includes the first identifier and the second identifier. The first relay device stores a correspondence between the first identifier and the second identifier, the first identifier is an identifier allocated by the first device to a target session, and the second identifier is an identifier that is allocated by the first relay device to the target session and that corresponds to the first identifier. According to this design, the first relay device also allocates the second identifier to the target session. In this way, when receiving the message including the second identifier, the first relay device can quickly find an application that is in the first relay device and that processes the target session, thereby improving communication efficiency.

In a possible design, the first message includes a third identifier, and the second message includes a fourth identifier. The third identifier is an identifier that is allocated by the first relay device to the target session and that corresponds to the fourth identifier, and the fourth identifier is an identifier allocated by the second device to the target session. According to this design, the first relay device allocates the third identifier to the target session. In this way, when receiving the message including the third identifier, the first relay device can quickly find an application that is in the first relay device and that processes the target session, thereby improving communication efficiency.

In a possible design, the first relay device may further send a first indication to the first device, to indicate that a connection between the first relay device and the second device is interrupted. According to this design, the first relay device may send, to the first device, the first indication indicating that the connection between the first relay device and the second device is interrupted, so that the first device searches for another path in time to communicate with the second device.

In a possible design, the first relay device may send the first indication to the first device after receiving a third message from the first device. The third message includes the indication information of the second device, or there is a correspondence between a destination address in the third message and the second device. According to this design, when detecting that the connection between the first relay device and the second device is interrupted, the first relay device may not send the first indication to the first device first. The first relay device sends the first indication to the first device only after receiving the third message from the first device, so that signaling interaction can be reduced.

In a possible design, after the first relay device receives a fourth message from the first device, if the connection between the first relay device and the second device is interrupted, the first relay device may send a fifth message to the second relay device based on the fourth message. The fourth message includes the indication information of the second device, or there is a correspondence between a destination address in the fourth message and the second device. The fifth message includes the indication information of the second device, or there is a correspondence between a destination address in the fifth message and the second device. The second relay device is configured to transmit a message between the first device and the second device. According to this design, when detecting that the connection between the first relay device and the second device is interrupted, the first relay device may forward the message from the first device to the second device via the second relay device. This can avoid that signaling transmission between the session management network element and the user plane network element fails, and improve reliability of communication between the session management network element and the user plane network element.

In a possible design, a source address and the destination address in the fourth message are respectively the address of the first device and the first address of the first relay device; and a source address and the destination address in the fifth message are respectively the first address of the first relay device and a third address of the second relay device. According to this design, two communication ends (the first device and the second relay device) do not know the addresses of each other, so that topology hiding can be implemented, and communication security is improved.

In a possible design, the fourth message includes the first identifier, and the fifth message includes the second identifier; or the fourth message includes the first identifier, and the fifth message includes the first identifier and the second identifier. The first identifier is an identifier allocated by the first device to the target session, and the second identifier is an identifier that is allocated by the first relay device to the target session and that corresponds to the first identifier. According to this design, the first relay device allocates the second identifier to the target session. In this way, when receiving the message including the second identifier, the first relay device can quickly find an application that is in the first relay device and that processes the target session, thereby improving communication efficiency.

In a possible design, each of the fourth message and the fifth message includes the third identifier. The third identifier is an identifier that is allocated by the first relay device to the target session and that corresponds to the fourth identifier, and the fourth identifier is an identifier allocated by the second device to the target session. In this case, the first relay device may further send, to the second relay device, information indicating a correspondence between the third identifier and the fourth identifier. According to this design, the first relay device allocates the third identifier to the target session. In this way, when receiving the message including the third identifier, the first relay device can quickly find an application that is in the first relay device and that processes the target session, thereby improving communication efficiency.

In a possible design, the first message may include a fifth identifier, and the second message includes a fourth identifier. The fifth identifier is an identifier that is allocated by a third relay device to the target session and that corresponds to the fourth identifier, and the fourth identifier is an identifier allocated by the second device to the target session. In this case, the first relay device may obtain, from the third relay device, information indicating a correspondence between the fifth identifier and the fourth identifier. According to this design, the third relay device allocates the fifth identifier to the target session, and the first relay device may reuse the identifier allocated by the third relay device, thereby improving service continuity.

According to a second aspect, an embodiment of this application provides a communication method. The method includes: A first device sends a first message to a first relay device. The first message includes indication information of a second device, or there is a correspondence between a destination address in the first message and the second device. The first relay device is configured to transmit a message between the first device and the second device. The first device is a session management network element, and the second device is a user plane network element; or the first device is the user plane network element, and the second device is the session management network element.

According to the method, the session management network element may interact with the user plane network element via the first relay device. In this way, even if a link between the session management network element and the user plane network element is interrupted or a route is faulty, communication between the session management network element and the user plane network element is not interrupted, thereby improving reliability of the communication between the session management network element and the user plane network element, and improving service continuity.

In a possible design, after sending the first message to the first relay device, the first device may send a sixth message to a second relay device. The sixth message includes the indication information of the second device, or there is a correspondence between a destination address in the sixth message and the second device. The second relay device is configured to transmit a message between the first device and the second device. According to this design, the session management network element may interact with the user plane network element via the first relay device, and may also interact with the user plane network element via the second relay device. In other words, there are a plurality of paths for exchanging signaling between the session management network element and the user plane network element, so that a success rate of signaling transmission between the session management network element and the user plane network element can be improved, and reliability of communication between the session management network element and the user plane network element is improved. In this way, a target session cannot be incorrectly deleted, and continuity of a service carried on the target session is ensured.

In a possible design, after detecting that a connection between the first device and the first relay device is interrupted, the first device may send the sixth message to the second relay device. According to this design, when detecting that the connection between the first device and the first relay device is interrupted, the first device may exchange signaling with the second device via the second relay device. This can avoid that signaling transmission between the session management network element and the user plane network element fails, and improve reliability of communication between the session management network element and the user plane network element.

In a possible design, after receiving a first indication from the first relay device, the first device may send the sixth message to the second relay device. The first indication indicates that a connection between the first relay device and the second device is interrupted.

According to this design, when receiving the first indication indicating that the connection between the first relay device and the second device is interrupted, the first device may exchange signaling with the second device via the second relay device. This can avoid that signaling transmission between the session management network element and the user plane network element fails.

In a possible design, before receiving the first indication from the first relay device, the first device sends a third message to the first relay device. The third message includes the indication information of the second device, or there is a correspondence between a destination address in the third message and the second device. In other words, when detecting that the connection between the first relay device and the second device is interrupted, the first relay device may not send the first indication to the first device first. The first relay device sends the first indication to the first device only after receiving the third message from the first device, so that signaling interaction can be reduced.

In a possible design, before sending the first message to the first relay device, the first device may receive a seventh message from the first relay device. The seventh message includes a third identifier and a fourth identifier, or the seventh message includes the third identifier; and the first message includes the third identifier. The third identifier is an identifier that is allocated by the first relay device to a target session and that corresponds to the fourth identifier, and the fourth identifier is an identifier allocated by the second device to the target session. According to this design, when communicating with the second device via the first relay device, the first device may use the third identifier allocated by the first relay device to the target session. In this way, when receiving the message including the third identifier, the first relay device can quickly find an application that is in the first relay device and that processes the target session, thereby improving communication efficiency.

According to a third aspect, an embodiment of this application provides a communication method. The method includes: A session management network element may send a first message to a first relay device, where the first message is for requesting to configure a session context for a target session in a user plane network element, and the first relay device is configured to transmit signaling between the session management network element and the user plane network element. Then, the session management network element may send a sixth message to a second relay device, where the sixth message is for requesting to modify or delete the session context in the user plane network element, and the second relay device is configured to transmit signaling between the session management network element and the user plane network element.

According to the method, the session management network element may interact with the user plane network element via the first relay device, and may also interact with the user plane network element via the second relay device. In other words, signaling may be exchanged between the session management network element and the user plane network element through a plurality of paths, so that a success rate of signaling transmission between the session management network element and the user plane network element can be improved, and reliability of communication between the session management network element and the user plane network element is improved. In this way, the target session cannot be incorrectly deleted, and continuity of a service carried on the target session is ensured.

For example, when a connection between the session management network element and the first relay device is interrupted, or a connection between the first relay device and the user plane network element is interrupted, the session management network element may exchange signaling with the user plane network element via the second relay device. This can avoid that signaling transmission between the session management network element and the user plane network element fails, and improve reliability of communication between the session management network element and the user plane network element. In this way, the session management network element may request to modify or delete the session context of the target session in the user plane network element, to manage the target session, thereby ensuring continuity of a service carried on the target session.

In a possible design, after detecting that the connection between the session management network element and the first relay device is interrupted, the session management network element may send a sixth message to the second relay device. According to this design, when detecting that the connection between the session management network element and the first relay device is interrupted, the session management network element may exchange signaling with the user plane network element via the second relay device. This can avoid that signaling transmission between the session management network element and the user plane network element fails, and improve reliability of communication between the session management network element and the user plane network element. In this way, the session management network element may request to modify or delete the session context of the target session in the user plane network element, to manage the target session, thereby ensuring continuity of a service carried on the target session.

In a possible design, after receiving a first indication from the first relay device, the session management network element may send a sixth message to the second relay device. The first indication indicates that the connection between the first relay device and the user plane network element is interrupted. According to this design, when receiving the first indication indicating that the connection between the first relay device and the user plane network element is interrupted, the session management network element may exchange signaling with the user plane network element via the second relay device. This can avoid that signaling transmission between the session management network element and the user plane network element fails, and improve reliability of communication between the session management network element and the user plane network element. In this way, the session management network element may request to modify or delete the session context of the target session in the user plane network element, to manage the target session, thereby ensuring continuity of a service carried on the target session.

In a possible design, before receiving the first indication from the first relay device, the session management network element may send a third message to the first relay device, where the third message is for requesting to modify or delete the session context in the user plane network element. In other words, when detecting that the connection between the first relay device and the user plane network element is interrupted, the first relay device may not send the first indication to the session management network element first. The first relay device sends the first indication to the session management network element only after receiving the third message from the session management network element, so that signaling interaction can be reduced.

In a possible design, before sending the first message to the first relay device, the session management network element may send a first PFCP association establishment request to the first relay device, to request to establish a connection between the session management network element and the user plane network element via the first relay device. According to this design, the connection between the session management network element and the user plane network element can be established in time via the first relay device.

In a possible design, before sending the sixth message to the second relay device, the session management network element may send a second PFCP association establishment request to the second relay device, to request to establish a connection between the session management network element and the user plane network element via the second relay device. According to this design, the connection between the session management network element and the user plane network element can be established in time via the second relay device.

According to a fourth aspect, an embodiment of this application provides a communication method. The method includes: After receiving a first message from a session management network element, a first relay device may send a second message to a user plane network element. The first message is for requesting to configure a session context for a target session in the user plane network element, and the second message is for requesting to configure the session context for the target session in the user plane network element. Then, after receiving a fourth message from the session management network element, the first relay device may send a fifth message to a second relay device. The fourth message is for requesting to modify or delete the session context in the user plane network element, the fifth message is for requesting to modify or delete the session context in the user plane network element, and there is a connection between the second relay device and the user plane network element.

According to the method, the session management network element may interact with the user plane network element via the first relay device, and may also interact with the user plane network element via the first relay device and the second relay device. In other words, signaling may be exchanged between the session management network element and the user plane network element through a plurality of paths, so that a success rate of signaling transmission between the session management network element and the user plane network element can be improved, and reliability of communication between the session management network element and the user plane network element is improved. In this way, the target session cannot be incorrectly deleted, and continuity of a service carried on the target session is ensured.

For example, when a connection between the first relay device and the user plane network element is interrupted, the session management network element may exchange signaling with the user plane network element via the first relay device and the second relay device. This can avoid that signaling transmission between the session management network element and the user plane network element fails, and improve reliability of communication between the session management network element and the user plane network element. In this way, the session management network element may request to modify or delete the session context of the target session in the user plane network element, to manage the target session, thereby ensuring continuity of a service carried on the target session.

In a possible design, after detecting that the connection between the first relay device and the user plane network element is interrupted, the first relay device may send a fifth message to the second relay device. According to this design, when detecting that the connection between the first relay device and the user plane network element is interrupted, the first relay device may forward signaling from the session management network element to the user plane network element via the second relay device. This can avoid that signaling transmission between the session management network element and the user plane network element fails, and improve reliability of communication between the session management network element and the user plane network element. In this way, the session management network element may request to modify or delete the session context of the target session in the user plane network element, to manage the target session, thereby ensuring continuity of a service carried on the target session.

In a possible design, a source address and a destination address in the first message are respectively an address of the session management network element and a first address of the first relay device. The first message further includes indication information of the user plane network element, or there is a correspondence between the destination address in the first message and the user plane network element. A source address and a destination address in the second message are respectively a second address of the first relay device and an address of the user plane network element. According to this design, two communication ends (namely, the session management network element and the user plane network element) do not know the addresses of each other, so that topology hiding can be implemented, and communication security is improved.

In a possible design, after sending the second message to the user plane network element, the first relay device may receive a fourth response from the user plane network element, where the fourth response indicates that the session context has been successfully configured in the user plane network element. Then, the first relay device may send a first response to the session management network element, where the first response indicates that the session context has been successfully configured in the user plane network element. According to this design, the session management network element may know in time whether the session context has been configured in the user plane network element, to manage the target session.

In a possible design, a source address and a destination address in the fourth response are respectively the address of the user plane network element and the second address of the first relay device. The fourth response further includes indication information of the session management network element, or there is a correspondence between the destination address in the fourth response and the session management network element. A source address and a destination address in the first response are respectively the first address of the first relay device and the address of the session management network element. According to this design, two communication ends (namely, the session management network element and the user plane network element) do not know the addresses of each other, so that topology hiding can be implemented, and communication security is improved.

In a possible design, a source address and a destination address in the fourth message are respectively the address of the session management network element and the first address of the first relay device. The fourth message further includes the indication information of the user plane network element, or there is a correspondence between the destination address in the fourth message and the user plane network element. A source address and a destination address in the fifth message are respectively the first address of the first relay device and a third address of the second relay device. The fifth message further includes the indication information of the user plane network element, or there is a correspondence between the destination address in the fifth message and the user plane network element. According to this design, two communication ends (namely, the session management network element and the user plane network element) do not know the addresses of each other, so that topology hiding can be implemented, and communication security is improved.

In a possible design, before receiving the first message from the session management network element, the first relay device may receive a first packet forwarding control protocol PFCP association establishment request from the session management network element, where the first PFCP association establishment request is for requesting to establish a connection between the session management network element and the user plane network element via the first relay device; and send a third PFCP association establishment request to the user plane network element, where the third PFCP association establishment request is for requesting to establish the connection between the session management network element and the user plane network element via the first relay device. According to this design, the connection between the session management network element and the user plane network element can be established in time via the first relay device.

According to a fifth aspect, an embodiment of this application provides a communication method. The method includes: A user plane network element may receive a second message from a first relay device, where the second message is for requesting to configure a session context for a target session in the user plane network element, and the first relay device is configured to transmit signaling between a session management network element that manages the target session and the user plane network element. Then, the user plane network element may send a sixth message to a second relay device, where the sixth message includes an event related to the target session, and the second relay device is configured to transmit signaling between the session management network element and the user plane network element.

According to the method, the user plane network element may interact with the session management network element via the first relay device, and may also interact with the session management network element via the second relay device. In other words, signaling may be exchanged between the session management network element and the user plane network element through a plurality of paths, so that a success rate of signaling transmission between the session management network element and the user plane network element can be improved, reliability of communication between the session management network element and the user plane network element is improved, and continuity of a service carried on the target session is ensured.

For example, when a connection between the session management network element and the first relay device is interrupted, or a connection between the first relay device and the user plane network element is interrupted, the user plane network element may exchange signaling with the session management network element via the second relay device. This can avoid that signaling transmission between the session management network element and the user plane network element fails, and improve reliability of communication between the session management network element and the user plane network element. In this way, the user plane network element may report, to the session management network element, the event related to the target session, so that the session management network element can manage the target session, thereby ensuring continuity of a service carried on the target session.

In a possible design, after detecting that the connection between the user plane network element and the first relay device is interrupted, the user plane network element may send the sixth message to the second relay device. According to this design, when detecting that the connection between the first relay device and the user plane network element is interrupted, the user plane network element may exchange signaling with the session management network element via the second relay device. This can avoid that signaling transmission between the session management network element and the user plane network element fails, and improve reliability of communication between the session management network element and the user plane network element. In this way, the user plane network element may report, to the session management network element, the event related to the target session, so that the session management network element can manage the target session, thereby ensuring continuity of a service carried on the target session.

In a possible design, after receiving a first indication from the first relay device, the user plane may send the sixth message to the second relay device. The first indication indicates that the connection between the session management network element and the first relay device is interrupted. According to this design, when receiving the first indication indicating that the connection between the session management network element and the first relay device is interrupted, the user plane network element may exchange signaling with the session management network element via the second relay device. This can avoid that signaling transmission between the session management network element and the user plane network element fails, and improve reliability of communication between the session management network element and the user plane network element. In this way, the user plane network element may report, to the session management network element, the event related to the target session, so that the session management network element can manage the target session, thereby ensuring continuity of a service carried on the target session.

In a possible design, before receiving the first indication from the first relay device, the user plane network element may send a third message to the first relay device, where the third message includes the event related to the target session. In other words, when detecting that the connection between the first relay device and the session management network element is interrupted, the first relay device may not send the first indication to the user plane network element first. The first relay device sends the first indication to the user plane network element only after receiving the third message from the user plane network element, so that signaling interaction can be reduced.

In a possible design, before receiving the second message from the first relay device, the user plane network element may receive a third PFCP association establishment request from the first relay device, where the third PFCP association establishment request is for requesting to establish a connection between the session management network element and the user plane network element via the first relay device. According to this design, the connection between the session management network element and the user plane network element can be established in time via the first relay device.

In a possible design, before sending the sixth message to the second relay device, the user plane network element may receive a fourth PFCP association establishment request from the second relay device, where the fourth PFCP association establishment request is for requesting to establish a connection between the session management network element and the user plane network element via the second relay device. According to this design, the connection between the session management network element and the user plane network element can be established in time via the second relay device.

According to a sixth aspect, an embodiment of this application provides a communication method. The method includes: after receiving a first message from a session management network element, a first relay device may send a second message to a user plane network element. The first message is for requesting to configure a session context for a target session in the user plane network element, and the second message is for requesting to configure the session context for the target session in the user plane network element. Then, after receiving a fourth message from the user plane network element, the first relay device may send a fifth message to a second relay device. The fourth message includes an event related to the target session, the fifth message includes an event related to the target session, and there is a connection between the second relay device and the session management network element.

According to the method, the user plane network element may interact with the session management network element via the first relay device, and may also interact with the session management network element via the first relay device and the second relay device. In other words, signaling may be exchanged between the session management network element and the user plane network element through a plurality of paths, so that a success rate of signaling transmission between the session management network element and the user plane network element can be improved, reliability of communication between the session management network element and the user plane network element is improved, and continuity of a service carried on the target session is ensured.

When a connection between the session management network element and the first relay device is interrupted, the user plane network element may exchange signaling with the session management network element via the first relay device and the second relay device. This can avoid that signaling transmission between the session management network element and the user plane network element fails, and improve reliability of communication between the session management network element and the user plane network element. In this way, the user plane network element may report, to the session management network element, the event related to the target session, so that the session management network element can manage the target session, thereby ensuring continuity of a service carried on the target session.

In a possible design, after detecting that the connection between the first relay device and the session management network element is interrupted, the first relay device may send the fifth message to the second relay device. According to this design, when detecting that the connection between the first relay device and the session management network element is interrupted, the first relay device may forward signaling from the user plane network element to the session management network element via the second relay device. This can avoid that signaling transmission between the session management network element and the user plane network element fails, and improve reliability of communication between the session management network element and the user plane network element. In this way, the user plane network element may report, to the session management network element, the event related to the target session, so that the session management network element can manage the target session, thereby ensuring continuity of a service carried on the target session.

In a possible design, a source address and a destination address in the first message are respectively an address of the session management network element and a first address of the first relay device. The first message further includes indication information of the user plane network element, or there is a correspondence between the destination address in the first message and the user plane network element. A source address and a destination address in the second message are respectively a second address of the first relay device and an address of the user plane network element. According to this design, two communication ends (namely, the session management network element and the user plane network element) do not know the addresses of each other, so that topology hiding can be implemented, and communication security is improved.

In a possible design, after sending the second message to the user plane network element, the first relay device may receive a fourth response from the user plane network element, where the fourth response indicates that the session context has been successfully configured in the user plane network element; and send a first response to the session management network element, where the first response indicates that the session context has been successfully configured in the user plane network element. According to this design, the session management network element may know in time whether the session context has been configured in the user plane network element, to manage the target session.

In a possible design, a source address and a destination address in the fourth response are respectively the address of the user plane network element and the second address of the first relay device. The fourth response further includes indication information of the session management network element, or there is a correspondence between the destination address in the fourth response and the session management network element. A source address and a destination address in the first response are respectively the first address of the first relay device and the address of the session management network element. According to this design, two communication ends (namely, the session management network element and the user plane network element) do not know the addresses of each other, so that topology hiding can be implemented, and communication security is improved.

In a possible design, a source address and a destination address in the fourth message are respectively an address of the user plane network element and a second address of the first relay device. The fourth message further includes the indication information of the session management network element, or there is a correspondence between the destination address in the fourth message and the session management network element. A source address and a destination address in the fifth message are respectively the second address of the first relay device and a fourth address of the second relay device. The fifth message further includes the indication information of the session management network element, or there is a correspondence between the destination address in the fifth message and the session management network element. According to this design, two communication ends (namely, the session management network element and the user plane network element) do not know the addresses of each other, so that topology hiding can be implemented, and communication security is improved.

In a possible design, before receiving the first message from the session management network element, the first relay device may receive a first PFCP association establishment request from the session management network element, where the first PFCP association establishment request is for requesting to establish a connection between the session management network element and the user plane network element via the first relay device; and send a third PFCP association establishment request to the user plane network element, where the third PFCP association establishment request is for requesting to establish the connection between the session management network element and the user plane network element via the first relay device. According to this design, the connection between the session management network element and the user plane network element can be established in time via the first relay device.

According to a seventh aspect, an embodiment of this application provides a communication apparatus, including units configured to perform the steps in any one of the foregoing aspects.

According to an eighth aspect, an embodiment of this application provides a communication device, including at least one processing element and at least one storage element. The at least one storage element is configured to store a program and data, and the at least one processing element is configured to: read and execute the program and the data that are stored in the storage element, so that the method provided in any one of the foregoing aspects of this application is implemented.

According to a ninth aspect, an embodiment of this application further provides a computer program. When the computer program is run on a computer, the computer is enabled to perform the method provided in any one of the foregoing aspects.

According to a tenth aspect, an embodiment of this application further provides a computer-readable storage medium. The computer-readable storage medium stores a computer program, and when the computer program is executed by a computer, the computer is enabled to perform the method provided in any one of the foregoing aspects.

According to an eleventh aspect, an embodiment of this application further provides a chip. The chip is configured to read a computer program stored in a memory, to perform the method provided in any one of the foregoing aspects.

According to a twelfth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete device.

For technical effects that can be achieved in any one of the seventh aspect to the twelfth aspect, refer to descriptions of technical effects that can be achieved in any one of the possible designs of the first aspect to the sixth aspect. Repeated parts are not described.

### BRIEF DESCRIPTION OF DRAWINGS

FIG. 1A is a diagram of an architecture of a communication system according to an embodiment of this application;
FIG. 1B is a diagram of an architecture of another communication system according to an embodiment of this application;
FIG. 2 is a flowchart of a first communication method according to an embodiment of this application;
FIG. 3 is a flowchart of a second communication method according to an embodiment of this application;
FIG. 4 is a flowchart of a third communication method according to an embodiment of this application;
FIG. 5 is a flowchart of a fourth communication method according to an embodiment of this application;
FIG. 6 is a flowchart of a fifth communication method according to an embodiment of this application;
FIG. 7 is a flowchart of a sixth communication method according to an embodiment of this application;
FIG. 8 is a flowchart of a seventh communication method according to an embodiment of this application;
FIG. 9 is a flowchart of an eighth communication method according to an embodiment of this application;
FIG. 10 is a flowchart of a ninth communication method according to an embodiment of this application;
FIG. 11 is a flowchart of a tenth communication method according to an embodiment of this application;
FIG. 12 is a flowchart of an eleventh communication method according to an embodiment of this application;
FIG. 13 is a diagram of a structure of a communication apparatus according to an embodiment of this application; and
FIG. 14 is a diagram of a structure of a communication device according to an embodiment of this application.

### DESCRIPTION OF EMBODIMENTS

This application provides a communication method and device, to improve reliability of communication between an SMF and a UPF. The method and the device are based on a same technical concept. Because problem resolving principles of the method and the device are similar, for implementation of the device and the method, refer to each other. Details are not repeated.

The following explains and describes some terms in embodiments of this application, to facilitate understanding by persons skilled in the art.
(1) A communication device is a device that has a communication function. For example, the communication device may be, but is not limited to, a terminal device, an access network (access network, AN) device, an access point, or a core network (core network, CN) device.
(2) A session is a connection that is established by a session management network element in a mobile communication system for a terminal device and that is among the terminal device, an access network device, a user plane network element, and a data network (data network, DN), is used to transmit user plane data between the terminal device and the DN, and is for example, a protocol data unit (protocol data unit, PDU) session. One terminal device may establish one or more PDU sessions with a mobile communication system (for example, a 5^{th} generation (5^{th} generation, 5G) communication system).
(3) In this application, a relay device may also be referred to as a signaling security gateway or a proxy.
(4) In this application, an address of a communication device may be an internet protocol (internet protocol, IP) address of the communication device, and the IP address may include an internet protocol version 4 (internet protocol version 4, IPv4) address and/or an internet protocol version 6 (internet protocol version 6, IPv6) address.
(5) In this application, in some possible manners, a first relay device and a second relay device may be in a primary/secondary relationship. When one of the first relay device and the second relay device is in a working state, the other device is in a standby state. The device in the working state is a primary device, and the device in the standby state is a secondary device. When the primary device is faulty, the secondary device takes over work of the primary device.

In some other possible manners, both the first relay device and the second relay device may be in the working state, and the SMF may select, in a load balancing manner, the first relay device or the second relay device to send signaling to the UPF.

In embodiments of this application, unless otherwise specified, a quantity of nouns indicates "a singular noun or a plural noun", namely, "one or more". "At least one" indicates one or more, and "a plurality of" indicates two or more. "And/or" describes an association relationship for describing associated objects and represents that three relationships may exist. For example, A and/or B may represent the following three cases: Only A exists, both A and B exist, and only B exists. The character "/" usually indicates an "or" relationship between the associated objects. For example, A/B indicates A or B. "At least one of the following items (pieces)" or a similar expression thereof refers to any combination of these items (pieces), including any combination of singular items (pieces) or plural items (pieces).

In addition, it should be understood that in descriptions of this application, terms such as "first" and "second" are merely used for distinguishing and description, but should not be understood as an indication or implication of relative importance, or should not be understood as an indication or implication of a sequence.

The following describes, with reference to the accompanying drawings, a communication system to which embodiments of this application are applied.

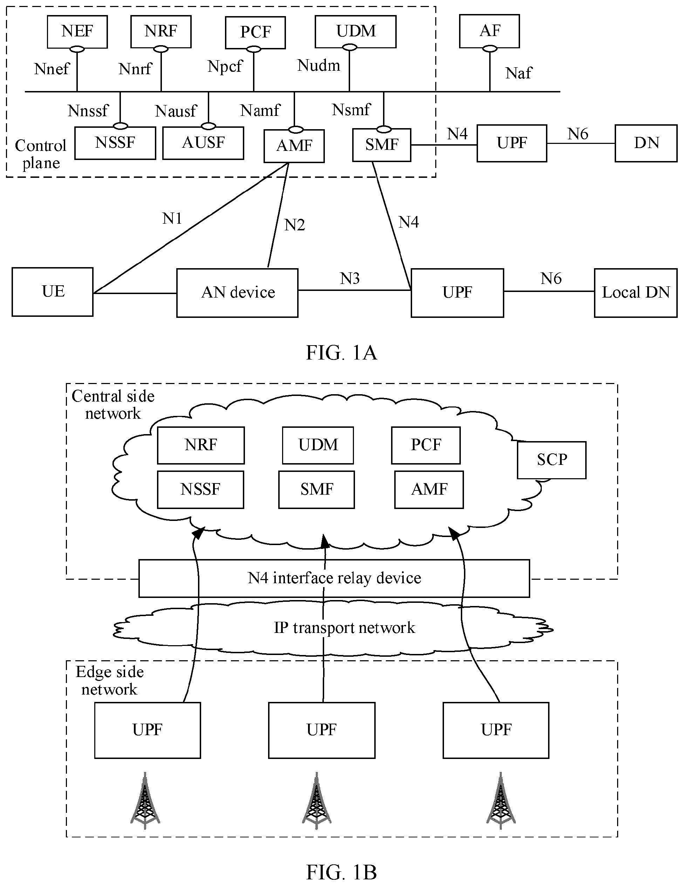

FIG. 1A shows a possible architecture of a communication system to which a communication method is applicable according to an embodiment of this application. As shown in FIG. 1A, the communication system includes three parts: a terminal device (user equipment (user equipment, UE) used as an example for description in the figure), a mobile communication system, and a data network (data network, DN). The mobile communication system provides an access service and a connection service for the terminal device.

The terminal device is an entity that can receive and transmit a radio signal on a user side, and needs to access the DN via the mobile communication system. Optionally, the terminal device may be used as a relay device of another data collector or another terminal device, so that these devices can perform service communication with the DN via the mobile communication system.

In this application, the terminal device may also be referred to as UE, a mobile station (mobile station, MS), a mobile terminal (mobile terminal, MT), or the like. Currently, examples of some terminal devices include a mobile phone (mobile phone), a tablet computer, a notebook computer, a palmtop computer, a vehicle-mounted device, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), and a wireless terminal in a smart home (smart home).

The mobile communication system may access at least one DN, and a same DN may also be accessed by at least one mobile communication system. The mobile communication system may include two parts: an AN and a CN.

A network device deployed in the AN is an AN device, and may be specifically responsible for functions such as radio access, radio resource management on an air interface side, QoS management, data compression and encryption, and user plane data forwarding.

As a node in a radio access network, the AN device may also be referred to as a base station, a radio access network (radio access network, RAN) node (or device), or an access point (access point, AP). Currently, examples of some AN devices include a new generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), or a baseband unit (baseband unit, BBU).

In addition, in a network structure, the AN device may include a central unit (central unit, CU) node and a distributed unit (distributed unit, DU) node. In this structure, protocol layers of the AN device are split. Functions of some protocol layers are controlled by a CU in a centralized manner. Functions of some or all of remaining protocol layers are distributed in a DU, and the CU controls the DU in a centralized manner.

Network elements deployed in the CN may be collectively referred to as CN devices. The CN device can connect the terminal device to different data networks, and perform services such as charging, mobility management, session management, and user plane forwarding. In mobile communication systems of different standards, CN devices having a same function may have different names. However, a specific name of a CN device having each function is not limited in this embodiment of this application. The following uses a CN in a 5G mobile communication system as an example to describe functions of main network elements in the CN in detail. The network elements in the CN in the 5G mobile communication system may be classified into two types: a control plane network element and a user plane network element.

The user plane network element includes a UPF. The UPF is mainly responsible for forwarding a packet data packet, controlling QoS, collecting statistics about charging information, and so on. In the 5G mobile communication system, the UPF may be deployed in a central side network, or may be deployed in an edge side network close to a user (or referred to as a radio access network close to the user).

The control plane network element is responsible for service procedure interaction, and delivering a data packet forwarding policy, a QoS control policy, and the like to a user plane. The control plane network element mainly includes an access and mobility management function (access and mobility management function, AMF), an SMF, a policy control function (policy and charging function, PCF), a network exposure function (network exposure function, NEF), a unified data management (unified data management, UDM), an authentication server function (authentication server function, AUSF), a network slice selection function (network slice selection function, NSSF), and a network function repository function (network function (network function, NF) repository function, NRF).

The AMF is mainly responsible for access management and mobility management of the UE, for example, responsible for maintaining a UE status, managing reachability of the UE, and forwarding a non-mobility management (mobility management, MM) non-access stratum (non-access-stratum, NAS) message.

The SMF is mainly responsible for session management of the UE, for example, managing establishment and deletion of a PDU session, and maintaining a PDU session context and user plane forwarding tunnel information.

The PCF is mainly responsible for policy control, for example, generating and/or managing a user, a session, or a quality of service (quality of service, QoS) flow processing policy.

The NEF is mainly configured to: provide a framework, authentication, and an interface that are related to network capability exposure, and transfer information between a network function of the mobile communication system and another network function.

The AUSF is mainly configured to perform security authentication on the UE.

The NSSF is mainly configured to select a network slice for the UE.

The NRF is mainly configured to provide functions of storing and selecting network functional entity information for another network element.

The UDM is responsible for subscription context management.

The mobile communication system further includes an application function (application function, AF), which is mainly configured to provide various services, can interact with a core network via the NEF, interacts with a policy management framework to perform policy management, or the like.

The DN is a network located outside the mobile communication system. For example, the DN may be a packet data network (packet data network, PDN), such as an Internet (Internet), an IP multimedia service (IP Multimedia Service, IMS) network, a data network dedicated to some applications, an Ethernet, or an IP local network. This is not limited in this application. A plurality of services may be deployed on the DN, to provide the terminal device with services such as a data service and/or a voice service.

In some possible manners, the DN may be a local DN (local DN), and the terminal device may access the local DN via the AN device and the UPF located in the edge side network. In some other possible manners, the terminal device may access the DN via the UPF located in a central network.

FIG. 1A further shows interfaces between a plurality of network elements in the communication system. The following describes related interfaces between the network elements in embodiments of this application. N1 is an interface between the UE and a core network control plane, and the UE may interact with the AMF through the N1 interface. N2 is an interface between the access network device and the core network control plane, and the access network device may interact with the AMF through the N2 interface. N3 is a communication interface between the access network device and the UPF, and is configured to transmit user data. N4 is a communication interface between the SMF and the UPF, and is configured to perform policy configuration and the like on the UPF. N6 is a communication port between the UPF and the DN. The interfaces between the control plane network elements in the CN may be implemented as corresponding service-based interfaces. For details, refer to FIG. 1A.

FIG. 1B shows a possible architecture of another communication system to which a communication method is applicable according to an embodiment of this application. As shown in FIG. 1B, the communication system includes a central side network and an edge side network.

The central side network includes a control plane network element and a service communication proxy (service communication proxy, SCP). For specific content of the control plane network element, refer to descriptions of FIG. 1A. Details are not described herein again. The SCP is a communication proxy network element deployed in a core network, is configured to: converge and forward hypertext transfer protocol (hypertext transfer protocol, HTTP) signaling messages, and may evolve a full-mesh networking mode to star networking, thereby simplifying a signaling network architecture.

The edge side network includes a user plane network element and an AN device. For specific content of the user plane network element and the AN device, refer to descriptions of FIG. 1A. Details are not described herein again.

The central side network and the edge side network may communicate with each other via a relay device on an N4 interface and an IP transport network. The relay device may be used for secure access and management between the central side network and the edge side network.

It needs to be noted that the communication systems shown in FIG. 1A and FIG. 1B do not constitute a limitation on a communication system to which embodiments of this application are applicable. Therefore, the communication method provided in embodiments of this application may be further applied to communication systems of various standards, for example, an LTE communication system, a 5G communication system, a 6th generation (6th generation, 6G) communication system, a future communication system, a vehicle-to-everything (vehicle-to-everything, V2X) system, a long term evolution-vehicle (LTE-vehicle, LTE-V) system, a vehicle-to-vehicle (vehicle-to-vehicle, V2V) system, an internet of vehicles system, a machine type communications (Machine Type Communications, MTC) system, an internet of things (internet of things, IoT) system, a long term evolution-machine to machine (LTE-machine to machine, LTE-M) system, a machine-to-machine (machine-to-machine, M2M) system, and an internet of things system. In addition, it needs to be further noted that names of the network elements in the communication system are not limited in embodiments of this application either. For example, in communication systems of different standards, the network elements may have other names. For another example, when the plurality of network elements are integrated into a same physical device, the physical device may have another name.

The following describes, with reference to the accompanying drawings, the solutions provided in this application.

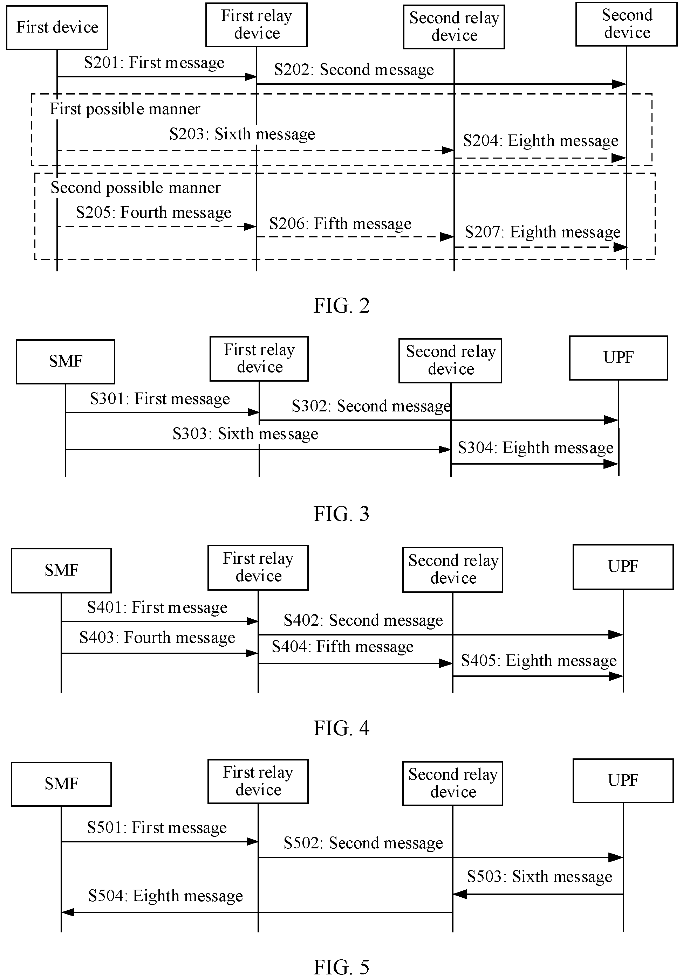

An embodiment of this application provides a communication method. The method may be applied to the communication systems shown in FIG. 1A and FIG. 1B. In the method, a first device is an SMF, and a second device is a UPF; or a first device is a UPF, and a second device is an SMF. The following describes a procedure of the method in detail with reference to a flowchart shown in FIG. 2.

S201: The first device sends a first message to a first relay device. Correspondingly, the first relay device receives the first message from the first device.

In some possible manners, the first message may include indication information of the second device.

The indication information of the second device may be information directly indicating the second device. For example, the indication information of the second device may include at least one of the following: an identifier of the second device, an IP address of the second device, a fully qualified domain name (Fully Qualified Domain Name, FQDN) of the second device, and a host name (HostName) of the second device.

Alternatively, the indication information of the second device may be information indirectly indicating the second device. Optionally, the first message includes a first address of the first relay device, and there is a correspondence between the first address and the second device. For example, the address of the first relay device may include 10.X.X.2 and 192.168.X.1. When the first device is the SMF, and the second device is the UPF, 10.X.X.2 may be the first address, and there is a correspondence between 10.X.X.2 and an address (for example, 192.168.X.10) of the UPF. When the first device is the UPF, and the second device is the SMF, 192.168.X.1 may be the first address, and there is a correspondence between 192.168.X.1 and an address (for example, 10.X.X.1) of the SMF.

In some other possible manners, there is a correspondence between a destination address in the first message and the second device. In this way, the first relay device may determine the second device based on the destination address in the first message. Optionally, the destination address in the first message may be a first address of the first relay device. For a correspondence between the first address and the second device, refer to descriptions of "there is a correspondence between the first address and the second device" in "information indirectly indicating the second device". Details are not described herein again.

In this application, the first message may be an existing message, or may be a new message. For example, when the first message is the existing message, the first message may be a PFCP session establishment request, for requesting to create a PFCP session context for a target session in the UPF; or the first message is a PFCP session modification request, for requesting to modify a PFCP session context of a target session in the UPF; or the first message is a PFCP session deletion request, for requesting to delete a PFCP session context of a target session in the UPF; or the first message is a PFCP session report request, for reporting an event related to a target session; or the first message is a PFCP session establishment response, for indicating that a PFCP session context has been created for a target session in the UPF; or the first message is a PFCP session modification response, for indicating that a PFCP session context of a target session has been modified in the UPF; or the first message is a PFCP session deletion response, for indicating that a PFCP session context of a target session has been deleted in the UPF.

S202: The first relay device sends a second message to the second device based on the first message. In other words, the first relay device may be configured to transmit a message between the first device and the second device.

The first relay device may determine an address of the second device in one of the following manners, to send the second message to the second device:
Manner 1: The first relay device determines the address of the second device based on the indication information of the second device.

Optionally, when the indication information of the second device includes the IP address of the second device, the first relay device may obtain the IP address of the second device from the indication information of the second device. When the indication information of the second device includes indication information other than the IP address of the second device, the first relay device may obtain a correspondence between the indication information of the second device and the address of the second device locally or from another communication device (for example, the SMF or the UPF), to determine the address of the second device.

Manner 2: The first relay device determines the address of the second device based on the destination address in the first message.

The first relay device may determine the destination address in the first message when receiving the first message, and obtain a correspondence between the destination address in the first message and the address of the second device locally or from another communication device (for example, the SMF or the UPF), to determine the address of the second device.

In this application, the second message may be the same as or different from the first message. The following describes a relationship between the second message and the first message in detail.
1. A source address and a destination address in the first message are different from those in the second message.

Specifically, the source address and the destination address in the first message may be respectively an address of the first device and the first address of the first relay device; and the source address and the destination address in the second message may be respectively a second address of the first relay device and the address of the second device. Optionally, the first relay device may replace the source address and the destination address in the first message with the second address of the first relay device and the address of the second device respectively, to obtain the second message.

The first relay device may have at least one address, the first address is an address used to communicate with the first device, and the second address is an address used to communicate with the second device.

For example, when the first device is the SMF, and the second device is the UPF, the source address and the destination address in the first message may be respectively an address (for example, 10.X.X.1) of the SMF and the first address of the first relay device. The source address and the destination address in the second message are respectively a second address of the first relay device and an address (for example, 192.168.X.10) of the UPF. The address of the first relay device may include 10.X.X.2 and 192.168.X.1. The first relay device may use 10.X.X.2 as the first address used to communicate with the SMF, and use 192.168.X.1 as the second address used to communicate with the UPF.

For another example, when the first device is the UPF, and the second device is the SMF, the source address and the destination address in the first message are respectively an address (for example, 192.168.X.10) of the UPF and the first address of the first relay device. The source address and the destination address in the second message are respectively a second address of the first relay device and an address (for example, 10.X.X.1) of the SMF. The address of the first relay device may include 10.X.X.2 and 192.168.X.1. The first relay device may use 192.168.X.1 as the first address used to communicate with the UPF, and use 10.X.X.2 as the second address used to communicate with the SMF.

2. An identifier indicating the target session in the first message is different from that in the second message.

Manner 1: The first message includes a first identifier, and the first identifier is an identifier allocated by the first device to the target session. The second message includes a second identifier, and the second identifier is an identifier that is allocated by the first relay device to the target session and that corresponds to the first identifier. In this case, the first relay device stores a correspondence between the first identifier and the second identifier. Optionally, the first relay device replaces the first identifier in the first message with the second identifier, to obtain the second message.

The first identifier and the second identifier may each be one of the following: a control plane fully qualified session endpoint identifier (Control Plane Fully Session Endpoint Identifier, CP F-SEID), a user plane fully qualified session endpoint identifier (User Plane Fully Session Endpoint Identifier, UP F-SEID), and a session endpoint identifier (Session Endpoint Identifier, SEID).

For example, the first device is the SMF, and the second device is the UPF. The first identifier is a first SEID allocated by the SMF to the target session, and the second identifier may be a second SEID that is allocated by the first relay device to the target session and that corresponds to the first SEID.

For another example, the first device is the SMF, and the second device is the UPF. The first identifier is a first CP F-SEID allocated by the SMF to the target session, and the first CP F-SEID may include the address of the SMF and a first SEID. The second identifier may be a second CP F-SEID that is allocated by the first relay device to the target session and that corresponds to the first CP F-SEID, and the second CP F-SEID may include the second address of the first relay device and a second SEID. For example, the first CP F-SEID is {10.X.X.1, first SEID}, and the second CP F-SEID is {192.168.X.1, second SEID}.

For another example, the first device is the SMF, and the second device is the UPF. The first identifier is a first CP F-SEID allocated by the SMF to the target session, and the first CP F-SEID may include the address of the SMF and a first SEID. The second identifier may be a third CP F-SEID that is allocated by the first relay device to the target session and that corresponds to the first CP F-SEID, and the third CP F-SEID may include the second address of the first relay device and the first SEID. For example, the first CP F-SEID is {10.X.X.1, first SEID}, and the third CP F-SEID is {192.168 .X.1, first SEID}.

For another example, the first device is the UPF, and the second device is the SMF. The first identifier is a third SEID allocated by the UPF to the target session. The second identifier may be a fourth SEID that is allocated by the first relay device to the target session and that corresponds to the third SEID.

For another example, the first device is the UPF, and the second device is the SMF. The first identifier is a first UP F-SEID allocated by the UPF to the target session, and the first UP F-SEID may include the address of the UPF and a third SEID. The second identifier is a second UP F-SEID that is allocated by the first relay device to the target session and that corresponds to the first UP F-SEID, and the second UP F-SEID may include the first address of the first relay device and a fourth SEID. For example, the first UP F-SEID is {192.168.X.10, third SEID}, and the second UP F-SEID is {10.X.X.2, fourth SEID}.

For another example, the first device is the UPF, and the second device is the SMF. The first identifier is a first UP F-SEID allocated by the UPF to the target session, and the first UP F-SEID may include the address of the UPF and a third SEID. The second identifier is a third UP F-SEID that is allocated by the first relay device to the target session and that corresponds to the first UP F-SEID, and the third UP F-SEID may include the first address of the first relay device and the third SEID. For example, the first UP F-SEID is {192.168.X.10, third SEID}, and the third UP F-SEID is {10.X.X.2, third SEID}.

Manner 2: The first message includes a first identifier, and the second message includes the first identifier and a second identifier. In this case, the first relay device stores a correspondence between the first identifier and the second identifier. Optionally, the first relay device adds the second identifier to the first message, to obtain the second message.

For specific content of the first identifier and the second identifier, refer to Manner 1. Details are not described herein again.

Manner 3: The first message includes a third identifier, and the second message includes a fourth identifier. The third identifier is an identifier that is allocated by the first relay device to the target session and that corresponds to the fourth identifier, and the fourth identifier is an identifier allocated by the second device to the target session. Optionally, the first relay device replaces the third identifier in the first message with the fourth identifier, to obtain the second message.

The third identifier and the fourth identifier may each be one of the following: a CP F-SEID, a UP F-SEID, and an SEID.

For example, the first device is the SMF, and the second device is the UPF. The third identifier is a fourth SEID that is allocated by the first relay device to the target session and that corresponds to the fourth identifier, and the fourth identifier is a third SEID allocated by the UPF to the target session.

For another example, the first device is the SMF, and the second device is the UPF. The third identifier is a second UP F-SEID that is allocated by the first relay device to the target session and that corresponds to the fourth identifier, and the second UP F-SEID may include the first address of the first relay device and a fourth SEID. The fourth identifier may be a first UP F-SEID allocated by the UPF to the target session, and the first UP F-SEID may include the address of the UPF and a third SEID. For example, the first UP F-SEID is {192.168.X.10, third SEID}, and the second UP F-SEID is {10.X.X.2, fourth SEID}.

For another example, the first device is the SMF, and the second device is the UPF. The third identifier is a third UP F-SEID that is allocated by the first relay device to the target session and that corresponds to the fourth identifier, and the third UP F-SEID may include the first address of the first relay device and a third SEID. The fourth identifier may be a first UP F-SEID allocated by the UPF to the target session, and the first UP F-SEID may include the address of the UPF and the third SEID. For example, the first UP F-SEID is {192.168.X.10, third SEID}, and the third UP F-SEID is {10.X.X.2, third SEID}.

For another example, the first device is the UPF, and the second device is the SMF. The third identifier is a second SEID that is allocated by the first relay device to the target session and that corresponds to the fourth identifier, and the fourth identifier is a first SEID allocated by the SMF to the target session.

For another example, the first device is the UPF, and the second device is the SMF. The third identifier is a second CP F-SEID that is allocated by the first relay device to the target session and that corresponds to the fourth identifier, and the second CP F-SEID may include the second address of the first relay device and a second SEID. The fourth identifier is a first CP F-SEID allocated by the SMF to the target session, and the first CP F-SEID may include the address of the SMF and a first SEID. For example, the first CP F-SEID is {10.X.X.1, first SEID}, and the second CP F-SEID is {192.168.X.1, second SEID}.

For another example, the first device is the UPF, and the second device is the SMF. The third identifier is a third CP F-SEID that is allocated by the first relay device to the target session and that corresponds to the fourth identifier, and the third CP F-SEID may include the second address of the first relay device and a first SEID. The fourth identifier is a first CP F-SEID allocated by the SMF to the target session, and the first CP F-SEID may include the address of the SMF and the first SEID. For example, the first CP F-SEID is {10.X.X.1, first SEID}, and the third CP F-SEID is {192.168.X.1, first SEID}.

Manner 3 may be used independently, or may be used in combination with Manner 1 or Manner 2.

Optionally, in Manner 3, before S201, the first device may receive a seventh message from the first relay device, where the seventh message includes a third identifier and a fourth identifier, or the seventh message includes a third identifier. Then, the first device sends, to the first relay device, a first message including the third identifier. For specific content of the seventh message, refer to descriptions of the first message in S201. Details are not described herein again. For example, the seventh message is a PFCP session establishment response, and the first message is a PFCP session establishment request.

3. An identifier indicating the target session in the first message is the same as that in the second message.

Optionally, each of the first message and the second message includes a first identifier and/or a fourth identifier. For example, each of the first message and the second message includes a fourth CP F-SEID (for example, {10.X.X.1, 13579}) and/or a fourth UP F-SEID (for example, {192.168.X.10, 24680}).

A plurality of relay devices may be disposed between the first device and the second device. In this way, information may be transmitted between the first device and the second device via at least one of the plurality of relay devices. The following provides descriptions.

Optionally, in a first possible manner, the method shown in FIG. 2 further includes the following steps.

S203: The first device sends a sixth message to a second relay device. Correspondingly, the second relay device receives the sixth message from the first device.

The sixth message includes the indication information of the second device, or there is a correspondence between a destination address in the sixth message and the second device. For specific content of the sixth message, refer to descriptions of the first message in S201. Only the first message is replaced with the sixth message, and the first relay device is replaced with the second relay device. Details are not repeated.

Optionally, when one of the following conditions is met, the first device may send the sixth message to the second relay device.

Condition 1: The first device detects that a connection between the first device and the first relay device is interrupted.

The first device may detect, in the following manner, whether the connection between the first device and the first relay device is interrupted:

The first device may periodically or aperiodically send a heartbeat signal to the first relay device. If receiving a response signal from the first relay device for the heartbeat signal within specified time after sending the heartbeat signal, the first device determines that the connection between the first device and the first relay device is not interrupted; or if the first device does not receive a response signal from the first relay device for the heartbeat signal within specified time after sending the heartbeat signal, the first device determines that the connection between the first device and the first relay device is interrupted. The heartbeat signal may be replaced with a path detection message.

Condition 2: The first device receives a first indication from the first relay device, where the first indication indicates that a connection between the first relay device and the second device is interrupted.

The first indication may be a message indicating that the connection between the first relay device and the second device is interrupted, or may be an information element in a message. Specifically, when the first indication is the information element, the first indication may reuse an information element in the existing message (for example, the PFCP session modification response or the PFCP session deletion response), or may be a new information element in the existing message (for example, the PFCP session modification response or the PFCP session deletion response). For example, the information element may be a first indication field. When a value of the field is a first value, it may indicate that the connection between the first relay device and the second device is interrupted.

The first relay device may send the first indication to the first device in one of the following implementations.

Implementation 1: After detecting that the connection between the second device and the first relay device is interrupted, the first relay device sends the first indication to the first device.

The first relay device may detect, in the following manner, whether the connection between the second device and the first relay device is interrupted:

The first relay device may periodically or aperiodically send a heartbeat signal to the second device. If receiving a response signal from the second device for the heartbeat signal within specified time after sending the heartbeat signal, the first relay device determines that the connection between the second device and the first relay device is not interrupted; or if the first relay device does not receive a response signal from the second device for the heartbeat signal within specified time after sending the heartbeat signal, the first relay device determines that the connection between the second device and the first relay device is interrupted.

Implementation 2: If detecting that the connection between the second device and the first relay device is interrupted, and receiving a third message from the first device, the first relay device sends the first indication to the first device.

For a manner in which the first relay device detects whether the connection between the second device and the first relay device is interrupted, refer to Implementation 1. Details are not described herein again.

The third message includes the indication information of the second device, or there is a correspondence between a destination address in the third message and the second device. For specific content of the third message, refer to descriptions of the first message in S201. Only the first message is replaced with the third message. Details are not repeated.

S204: The second relay device sends an eighth message to the second device. Correspondingly, the second device receives the eighth message from the second relay device. In this way, the second relay device may be configured to transmit a message between the first device and the second device.

The sixth message and the eighth message may be the same, or may be different. The following describes a relationship between the eighth message and the sixth message in detail.
1. A source address and a destination address in the sixth message are different from those in the eighth message.

Specifically, the source address and the destination address in the sixth message may be respectively the address of the first device and a third address of the second relay device, and the source address and the destination address in the eighth message may be respectively a fourth address of a third relay device and the address of the second device. Optionally, the second relay device may replace the source address and the destination address in the sixth message with the fourth address of the second relay device and the address of the second device respectively, to obtain the eighth message.

The second relay device may have at least one address, the third address of the second relay device is an address used to communicate with the first device, and the fourth address of the second relay device is an address used to communicate with the second device.

For example, when the first device is the SMF, and the second device is the UPF, the source address and the destination address in the sixth message may be respectively the address (for example, 10.X.X.1) of the SMF and the third address of the second relay device. The source address and the destination address in the eighth message are respectively the fourth address of the second relay device and the address (for example, 192.168.X.10) of the UPF. The address of the second relay device may include 10.X.X.3 and 192.168.X.2. The second relay device may use 10.X.X.3 as the third address used to communicate with the SMF, and use 192.168.X.2 as the fourth address used to communicate with the UPF.

For another example, when the first device is the UPF, and the second device is the SMF, the source address and the destination address of the sixth message are respectively the address (for example, 192.168.X.10) of the UPF and the third address of the second relay device. The source address and the destination address in the eighth message are respectively the fourth address of the second relay device and the address (for example, 10.X.X.1) of the SMF. The address of the second relay device may include 10.X.X.3 and 192.168.X.2. The second relay device may use 192.168.X.2 as the third address used to communicate with the UPF, and use 10.X.X.3 as the fourth address used to communicate with the SMF.

2. An identifier indicating the target session in the sixth message is different from that in the eighth message.

Manner A: The sixth message includes a first identifier, and the first identifier is an identifier allocated by the first device to the target session. The eighth message includes a second identifier, and the second identifier is an identifier that is allocated by the first relay device to the target session and that corresponds to the first identifier. Optionally, the second relay device replaces the first identifier in the sixth message with the second identifier, to obtain the eighth message. Before the replacement, the second relay device may obtain, from the first relay device, information indicating a correspondence between the first identifier and the second identifier. A specific obtaining manner is not limited in this application.

Manner B: The sixth message includes a first identifier, and the eighth message includes the first identifier and a second identifier. Optionally, the second relay device adds the second identifier to the sixth message, to obtain the eighth message.

In Manner A and Manner B, for specific content of the first identifier and the second identifier, refer to Manner 1. Details are not described herein again.

Manner C: The sixth message includes a third identifier, and the eighth message includes a fourth identifier. The third identifier is an identifier that is allocated by the first relay device to the target session and that corresponds to the fourth identifier, and the fourth identifier is an identifier allocated by the second device to the target session. Optionally, the first relay device replaces the third identifier in the sixth message with the fourth identifier, to obtain the eighth message. Before the replacement, the second relay device may obtain, from the first relay device, information indicating a correspondence between the third identifier and the fourth identifier. A specific obtaining manner is not limited in this application.

For specific content of the third identifier and the fourth identifier, refer to Manner 3. Details are not described herein again.

Manner C may be used independently, or may be used in combination with Manner A or Manner B.

3. An identifier indicating the target session in the sixth message is the same as that in the eighth message.

Optionally, each of the sixth message and the eighth message includes a first identifier and/or a fourth identifier. For example, each of the sixth message and the eighth message includes a fourth CP F-SEID (for example, {10.X.X.1, 13579}) and/or a fourth UP F-SEID (for example, {192.168.X.10, 24680}).

Optionally, in a first possible manner, the first device and the second device in S203 and S204 may be interchanged. For example, in S201 and S202, after the SMF sends the first message to the first relay device, the first relay device sends the second message to the UPF. In S203 and S204, after the UPF sends the sixth message to the second relay device, the second relay device sends the eighth message to the SMF.

Optionally, in a second possible manner, the method shown in FIG. 2 further includes the following steps.

S205: The first device sends a fourth message to the first relay device. Correspondingly, the first relay device receives the fourth message from the first device.

The fourth message includes the indication information of the second device, or there is a correspondence between a destination address in the fourth message and the second device. For specific content of the fourth message, refer to descriptions of the first message in S201. Only the first message is replaced with the fourth message. Details are not repeated.

The fourth message may be the same as or different from the first message.

S206: When a connection between the first relay device and the second device is interrupted, the first relay device may send a fifth message to the second relay device based on the fourth message.

The fifth message includes the indication information of the second device, or there is a correspondence between a destination address in the fifth message and the second device. For specific content of the fifth message, refer to descriptions of the first message in S201. Only the first message is replaced with the fifth message. Details are not repeated.

In addition, for a manner in which the first relay device determines that the connection between the first relay device and the second device is interrupted, refer to S203. Details are not described herein again.

In this application, the fifth message may be the same as or different from the fourth message. The following describes a relationship between the fifth message and the fourth message in detail.
1. A source address and a destination address in the fourth message are different from those in the fifth message.

Specifically, the source address and the destination address in the fourth message are respectively the address of the first device and the first address of the first relay device; and the source address and the destination address in the fifth message are respectively the first address of the first relay device and a third address of the second relay device. Optionally, the first relay device may replace the source address and the destination address in the fourth message with the first address of the first relay device and the third address of the second relay device respectively, to obtain the fifth message.

For example, the first address of the first relay device is 10.X.X.2, and the third address of the second relay device is 10.X.X.3.

2. An identifier indicating the target session in the fourth message is different from that in the fifth message.

Implementation A: The fourth message includes a first identifier, and the first identifier is an identifier allocated by the first device to the target session. The fifth message includes a second identifier, and the second identifier is an identifier that is allocated by the first relay device to the target session and that corresponds to the first identifier. Optionally, the first relay device may replace the first identifier in the fourth message with the second identifier, to obtain the fifth message.

For specific content of the first identifier and the second identifier, refer to Manner 1. Details are not described herein again.

Implementation B: The fourth message includes a first identifier; and the fifth message includes the first identifier and a second identifier. Optionally, the first relay device may add the second identifier to the fourth message, to obtain the fifth message.

3. An identifier indicating the target session in the fourth message is the same as that in the fifth message.

In some possible manners, each of the fourth message and the fifth message includes a fourth CP F-SEID (for example, {10.X.X.1, 13579}) and/or a fourth UP F-SEID (for example, {192.168.X.10, 24680}).

In some other possible manners, each of the fourth message and the fifth message may include a third identifier. In this case, the first relay device may send, to the second relay device, information indicating a correspondence between the third identifier and a fourth identifier, so that the second relay device determines the fourth identifier. The third identifier is an identifier that is allocated by the first relay device to the target session and that corresponds to the fourth identifier, and the fourth identifier is an identifier allocated by the second device to the target session. For specific content of the third identifier and the fourth identifier, refer to Manner 3. Details are not described herein again.

S207: The second relay device sends an eighth message to the second device. Correspondingly, the second device receives the eighth message from the second relay device. In this way, the second relay device is configured to transmit a message between the first device and the second device.

For specific content of the eighth message, refer to descriptions of the eighth message in S204. Details are not repeated.

Optionally, in a second possible manner, the first device and the second device in S205 to S207 may be interchanged. For example, in S201 and S202, after the SMF sends the first message to the first relay device, the first relay device sends the second message to the UPF. In S204 to S207, after the UPF sends the fourth message to the first relay device, the first relay device may send the fifth message to the second relay device; and after receiving the fifth message, the second relay device may send the eighth message to the SMF.

The method shown in FIG. 2 is described via the two relay devices as an example. In actual application, the message may alternatively be transferred between the first device and the second device via at least two relay devices. For example, the first device first communicates with the second device via a third relay device, and then performs the method shown in FIG. 2. In this case, the first message includes a fifth identifier, the fifth identifier is an identifier that is allocated by the third relay device to a target session and that corresponds to a fourth identifier, and the fourth identifier is an identifier allocated by the second device to the target session. The second message includes the fourth identifier. The first relay device may obtain, from the third relay device, information indicating a correspondence between the fifth identifier and the fourth identifier, to determine the fourth identifier.

An embodiment of this application provides a communication method. The method shows an example of the first possible manner in the method shown in FIG. 2. Refer to a flowchart shown in FIG. 3. The following describes a procedure of the method in detail by using an example in which a session management network element is an SMF and a user plane network element is a UPF.

S301: The SMF sends a first message to a first relay device. The first message includes indication information of the UPF, or there is a correspondence between a destination address in the first message and the UPF.

For specific content of S301, refer to S201. Details are not repeated.

Optionally, when a target session needs to be created or a parameter of a target session needs to be modified, the SMF may send the first message to the first relay device. For example, after receiving a session establishment request message from a terminal device, the SMF may send the first message to the first relay device, where the session establishment request message is for requesting to create the target session. For another example, when an operator modifies subscription data of a user corresponding to a target session or a terminal device corresponding to a target session triggers a handover procedure due to mobility, the SMF may send the first message to the first relay device.

The first message may be for requesting to configure a session context for the target session in the UPF, and the configuring a session context for the target session may include: creating the session context for the target session or modifying the context of the target session.

In this application, the first message may be an existing message, or may be a new message. When the first message is the existing message, the first message is a PFCP session establishment request, for requesting to create a PFCP session context for the target session; or the first message is a PFCP session modification request, for requesting to modify a PFCP session context of the target session.

S302: The first relay device sends a second message to the UPF.

For specific content of S302, refer to S202. Details are not repeated.

The second message is for requesting to configure the session context for the target session in the UPF. After receiving the second message, the UPF may configure the session context for the target session. For example, when the second message is for requesting to create the session context for the target session in the UPF, the UPF may create the session context for the target session locally. For another example, when the second message is for requesting to modify the session context of the target session in the UPF, the UPF may modify the session context of the target session.

In this application, the second message may be an existing message, or may be a new message. When the second message is the existing message, the second message may be a PFCP session establishment request or a PFCP session modification request.

S303: The SMF sends a sixth message to a second relay device. The sixth message includes indication information of the UPF, or there is a correspondence between a destination address in the sixth message and the UPF.

For specific content of S303, refer to S203. Details are not repeated.

The sixth message is for requesting to modify or delete the session context of the target session in the UPF.

Optionally, when the parameter of the target session needs to be modified or the target session needs to be deleted, the SMF may send the sixth message to the second relay device. For example, when the operator modifies the subscription data of the user corresponding to the target session, the SMF may send the sixth message to the second relay device. For another example, when the terminal device corresponding to the target session triggers the handover procedure due to the mobility, the SMF may send the sixth message to the second relay device.

In this application, the sixth message may be an existing message, or may be a new message. When the sixth message is the existing message, the sixth message is a PFCP session modification request, for requesting to modify the PFCP session context of the target session; or the sixth message is a PFCP session deletion request, for requesting to delete the PFCP session context of the target session.

S304: The second relay device sends an eighth message to the UPF, where the eighth message is for requesting to modify or delete the session context in the UPF.

For specific content of S304, refer to S204. Details are not repeated.

In this application, the eighth message may be an existing message, or may be a new message. When the eighth message is the existing message, the eighth message is a PFCP session modification request, for requesting to modify the PFCP session context of the target session; or the eighth message is a PFCP session deletion request, for requesting to delete the PFCP session context of the target session.

According to the method, the SMF may interact with the UPF via the first relay device, and may also interact with the UPF via the second relay device. In other words, signaling may be exchanged between the SMF and the UPF through a plurality of paths, so that a success rate of signaling transmission between the SMF and the UPF can be improved, and reliability of communication between the SMF and the UPF is improved. In this way, the target session cannot be incorrectly deleted, and continuity of a service carried on the target session is ensured.

For example, when a connection between the SMF and the first relay device is interrupted, or a connection between the first relay device and the UPF is interrupted, the SMF may exchange signaling with the UPF via the second relay device. This can avoid that signaling transmission between the SMF and the UPF fails, and improve reliability of communication between the SMF and the UPF. In this way, the SMF may request to modify or delete the session context of the target session in the UPF, to manage the target session, thereby ensuring continuity of a service carried on the target session.

Optionally, before S301, the method shown in FIG. 3 further includes steps A1 and A2.

A1: The SMF sends a first PFCP association establishment request to the first relay device, where the first PFCP association establishment request is for requesting to establish a connection between the SMF and the UPF via the first relay device.

Optionally, a source address and a destination address in the first PFCP association establishment request are respectively an address (for example, 10.X.X.1) of the SMF and a first address (for example, 10.X.X.2) of the first relay device.

In some possible manners, the first PFCP association establishment request further includes indication information of the UPF. For specific content of the indication information of the UPF, refer to descriptions of the indication information of the second device in S201. Details are not described herein again. In some other possible manners, there is a correspondence between the destination address in the first PFCP association establishment request and the UPF. In this way, after receiving the first PFCP association establishment request, the first relay device may determine an address of the UPF based on the indication information of the UPF or the correspondence between the destination address in the first PFCP association establishment request and the UPF.

A2: The first relay device sends a third PFCP association establishment request to the UPF, where the third PFCP association establishment request is for requesting to establish the connection between the SMF and the UPF via the first relay device.

Optionally, a source address and a destination address in the third PFCP association establishment request are respectively a second address (for example, 192.168.X.1) of the first relay device and the address (for example, 192.168.X.10) of the UPF.

For example, after receiving the first PFCP association establishment request, the first relay device may obtain the address of the UPF based on the indication information of the UPF or the correspondence between the destination address in the first PFCP association establishment request and the UPF; and then replace the source address and the destination address in the first PFCP association establishment request with the second address of the first relay device and the address of the UPF respectively, to obtain the third PFCP association establishment request.

According to the method, the SMF establishes an association with the UPF via the first relay device. In addition, in the method, the first relay device may process the source address and the destination address in the received message. In this way, the source address and the destination address in the message sent by the SMF are respectively the address of the SMF and the first address of the first relay device, and the source address and the destination address in the message received by the UPF are respectively the second address of the first relay device and the address of the UPF. Two communication ends (namely, the SMF and the UPF) do not know the addresses of each other, so that topology hiding can be implemented, and communication security is improved.

Optionally, before S303, the method shown in FIG. 3 further includes steps B1 and B2.

B1: The SMF sends a second PFCP association establishment request to the second relay device, where the second PFCP association establishment request is for requesting to establish a connection between the SMF and the UPF via the second relay device.

Optionally, a source address and a destination address in the second PFCP association establishment request are respectively an address of the SMF and a third address (for example, 10.X.X.3) of the second relay device.

In some possible manners, the second PFCP association establishment request further includes indication information of the UPF. For specific content of the indication information of the UPF, refer to descriptions of the indication information of the second device in S201. Details are not described herein again. In some other possible manners, there is a correspondence between the destination address in the second PFCP association establishment request and the UPF. In this way, after receiving the second PFCP association establishment request, the second relay device may determine the address of the UPF based on the indication information of the UPF or the correspondence between the destination address in the second PFCP association establishment request and the UPF.

B2: The second relay device sends a fourth PFCP association establishment request to the UPF, where the fourth PFCP association establishment request is for requesting to establish the connection between the SMF and the UPF via the second relay device.

Optionally, a source address and a destination address in the fourth PFCP association establishment request are respectively a fourth address (for example, 192.168.X.2) of the second relay device and the address (for example, 192.168.X.10) of the UPF.

For example, after receiving the second PFCP association establishment request, the second relay device may obtain the address of the UPF based on the indication information of the UPF or the correspondence between the destination address in the second PFCP association establishment request and the UPF; and then, the second relay device replaces the source address and the destination address in the second PFCP association establishment request with the fourth address of the second relay device and the address of the UPF respectively, to obtain the fourth PFCP association establishment request. For specific content of obtaining the address of the UPF by the second relay device, refer to descriptions of "the first relay device determines the address of the second device based on the indication information of the second device" in S202. Only the first relay device is replaced with the second relay device. Details are not described herein again.

According to the method, the SMF establishes an association with the UPF via the first relay device. In addition, in the method, the second relay device may process the source address and the destination address in the received message. In this way, the source address and the destination address in the message sent by the SMF are respectively the address of the SMF and the third address of the second relay device, and the source address and the destination address in the message received by the UPF are respectively the fourth address of the second relay device and the address of the UPF. Two communication ends (namely, the SMF and the UPF) do not know the addresses of each other, so that topology hiding can be implemented, and communication security is improved.

Optionally, after S302, the method shown in FIG. 3 further includes steps C1 and C2.

C1: The UPF sends a fourth response to the first relay device. The fourth response may include indication information of the SMF, or there is a correspondence between a destination address in the fourth response and the SMF.

For specific content of the fourth response, refer to descriptions of the first message in S201. For the indication information of the SMF, refer to descriptions of "the indication information of the second device" in S201. Details are not repeated.

The fourth response is a response message of the second message, and indicates that the session context has been configured for the target session in the UPF. For example, when the second message is for requesting to create the session context for the target session in the UPF, the fourth response may indicate that the session context has been created for the target session in the UPF. For another example, when the second message is for requesting to modify the session context of the target session in the UPF, the fourth response may indicate that the session context of the target session has been modified in the UPF.

Optionally, the source address and the destination address in the fourth response are respectively an address (for example, 192.168.X.10) of the UPF and a second address (for example, 192.168.X.1) of the first relay device.

In this application, the fourth response may be an existing message, or may be a new message. When the fourth response is the existing message, the fourth response may be a PFCP session establishment response or a PFCP session modification response.

C2: The first relay device sends a first response to the SMF, where the first response is a response message of the first message, and indicates that the session context has been configured for the target session in the UPF.

Optionally, a source address and a destination address in the first response are respectively a first address (for example, 10.X.X.2) of the first relay device and an address (for example, 10.X.X.1) of the SMF.

For example, after receiving the fourth response, the first relay device may obtain the address of the SMF based on the indication information of the SMF or the correspondence between the destination address in the fourth response and the SMF; and then, the first relay device replaces the source address and the destination address in the fourth response with the first address of the first relay device and the address of the SMF respectively, to obtain the first response.

When the indication information of the SMF includes an IP address of the SMF, the first relay device may obtain the address of the SMF from the indication information of the SMF. When the indication information of the SMF includes indication information other than the IP address of the SMF, the first relay device may obtain a correspondence between the indication information of the SMF and the address of the SMF locally or from another communication device (for example, the SMF or the SMF), to determine the address of the SMF. When there is the correspondence between the destination address in the fourth response and the SMF, the first relay device may obtain a correspondence between the third address and the SMF locally or from another communication device (for example, the SMF or the SMF), to determine the address of the SMF.

For a relationship between the fourth response and the first response, refer to descriptions of a relationship between the first message and the second message in the method shown in FIG. 2. In this case, the first device is the UPF, and the second device is the SMF. Details are not described herein again.

Optionally, after S304, the method shown in FIG. 2 further includes steps L1 and L2.

L1: The UPF sends a sixth response to the second relay device. The sixth response may include indication information of the SMF, or there is a correspondence between a destination address in the sixth response and the SMF.

For specific content of the sixth response, refer to descriptions of the sixth message in S203. For the indication information of the SMF, refer to descriptions of "the indication information of the second device" in S201. Only the second device is replaced with the SMF. Details are not repeated.

The sixth response is a response message of the eighth message, and indicates that the session context in the UPF has been modified or deleted. For example, when the eighth message is for requesting to modify the session context in the UPF, the sixth response may indicate that the session context in the UPF has been modified. For another example, when the eighth message is for requesting to delete the session context in the UPF, the sixth response may indicate that the session context in the UPF has been deleted.

Optionally, a source address and a destination address in the sixth response are respectively an address (for example, 192.168.X.10) of the UPF and a fourth address (for example, 192.168.X.2) of the second relay device.

In this application, the sixth response may be an existing message, or may be a new message. When the sixth response is the existing message, the sixth response may be a PFCP session modification response or a PFCP session deletion response.

L2: The second relay device sends a second response to the SMF. The second response is a response message of the sixth message, and indicates that the session context in the UPF has been modified or deleted.

Optionally, a source address and a destination address in the second response are respectively a third address (for example, 10.X.X.3) of the second relay device and an address (for example, 10.X.X.1) of the SMF.

For example, after receiving the sixth response, the second relay device may obtain the address of the SMF based on the indication information of the SMF or the correspondence between the fourth address and the SMF; and then, the second relay device replaces the source address and the destination address in the sixth response with the third address of the second relay device and the address of the SMF respectively, to obtain the second response.

For a relationship between the sixth response and the second response, refer to descriptions of a relationship between the sixth message and the eighth message in the method shown in FIG. 2. In this case, the first device is the UPF, and the second device is the SMF. Details are not described herein again.

An embodiment of this application provides another communication method. The method shows an example of the second possible manner in the method shown in FIG. 2. Refer to a flowchart shown in FIG. 4. The following describes a procedure of the method in detail by using an example in which a session management network element is an SMF and a user plane network element is a UPF.

S401: The SMF sends a first message to a first relay device. The first message includes indication information of the UPF, or there is a correspondence between a destination address in the first message and the UPF. The first message is for requesting to configure a session context for a target session in the UPF.

S402: The first relay device sends a second message to the UPF, where the second message is for requesting to configure the session context for the target session in the UPF.

For specific content of S401 and S402, refer to S301 and S302. Details are not described herein again.

S403: The SMF sends a fourth message to the first relay device. The fourth message includes indication information of the UPF, or there is a correspondence between a destination address in the fourth message and the UPF. The fourth message is for requesting to modify or delete the session context of the target session in the UPF.

For specific content of S403, refer to S205. Details are not described herein again.

S404: The first relay device sends a fifth message to a second relay device, where the fifth message is for requesting to modify or delete the session context of the target session in the UPF.

For specific content of S404, refer to S206. Details are not repeated.

In this application, the fifth message may be an existing message (for example, a PFCP session modification request or a PFCP session deletion request), or may be a new message.

S405: The second relay device sends an eighth message to the UPF, where the eighth message is for requesting to modify or delete the session context of the target session in the UPF.

For specific content of S405, refer to S207. Details are not described herein again.

According to the method, the SMF may interact with the UPF via the first relay device, and may also interact with the UPF via the first relay device and the second relay device. In other words, signaling may be exchanged between the SMF and the UPF through a plurality of paths, so that a success rate of signaling transmission between the SMF and the UPF can be improved, and reliability of communication between the SMF and the UPF is improved. In this way, the target session cannot be incorrectly deleted, and continuity of a service carried on the target session is ensured.

For example, when a connection between the first relay device and the UPF is interrupted, the SMF may exchange signaling with the UPF via the first relay device and the second relay device. This can avoid that signaling transmission between the SMF and the UPF fails, and improve reliability of communication between the SMF and the UPF. In this way, the SMF may request to modify or delete the session context of the target session in the UPF, to manage the target session, thereby ensuring continuity of a service carried on the target session.

Optionally, after S402, the method shown in FIG. 4 further includes steps D1 and D2.

D1: The UPF sends a fourth response to the first relay device, where the fourth response indicates that the session context has been configured in the UPF.

D2: The first relay device sends a first response to the SMF, where the first response indicates that the session context has been configured in the UPF.

For specific content of D1 and D2, refer to steps C1 and C2. Details are not described herein again.

According to the method, the UPF may notify the SMF in time that the session context has been configured for the target session. In this way, the SMF may perform subsequent management on the target session. In addition, in the method, the first relay device may process the source address and the destination address in the received message. In this way, the source address and the destination address in the message sent by the UPF are respectively an address of the UPF and a second address of the first relay device, and a source address and a destination address in the message received by the SMF are respectively a first address of the first relay device and an address of the SMF. Two communication ends (namely, the SMF and the UPF) do not know the address of each other, so that topology hiding can be implemented, and communication security is improved.

Optionally, before S401, the method shown in FIG. 4 further includes steps E1 and E2.

E1: The SMF sends a first PFCP association establishment request to the first relay device, where the first PFCP association establishment request is for requesting to establish a connection between the SMF and the UPF via the first relay device.

E2: The first relay device sends a third PFCP association establishment request to the UPF, where the third PFCP association establishment request is for requesting to establish the connection between the SMF and the UPF via the first relay device.

For specific content of E1 and E2, refer to steps A1 and A2. Details are not described herein again.

Optionally, before S404, the method shown in FIG. 4 further includes steps F1 and F2.

F1: The SMF sends a second PFCP association establishment request to the second relay device, where the second PFCP association establishment request is for requesting to establish a connection between the SMF and the UPF via the second relay device.

F2: The second relay device sends a fourth PFCP association establishment request to the UPF, where the fourth PFCP association establishment request is for requesting to establish the connection between the SMF and the UPF via the second relay device.

For specific content of F1 and F2, refer to steps B1 and B2. Details are not described herein again.

Optionally, after S405, the method further includes steps M1 to M3.

M1: The UPF sends a sixth response to the second relay device.

For specific content of M1, refer to step L1. Details are not described herein again.

M2: The second relay device sends a fifth response to the first relay device, where the fifth response indicates that the session context of the target session in the UPF has been modified or deleted.

Optionally, the fifth response is a response message of the fifth message. A source address and a destination address in the fifth response are respectively a fourth address (for example, 192.168.X.2) of the second relay device and a second address (for example, 192.168.X.1) of the first relay device. For example, after receiving the sixth response, the second relay device may replace the source address and the destination address in the sixth response with the fourth address of the second relay device and the second address of the first relay device respectively, to obtain the fifth response. The second address of the first relay device may be obtained by the second relay device from the SMF, the UPF, or the first relay device.

In some possible manners, the fifth response further includes indication information of the SMF. For specific content of the indication information of the SMF, refer to step C1. Details are not described herein again. In some other possible manners, there is a correspondence between a destination address in the first response and the SMF.

Optionally, an identifier indicating the target session in the fifth response may be the same as an identifier indicating the target session in the fifth message, or may be different from an identifier indicating the target session in the fifth message.

In some possible manners, in the identifier indicating the target session in the fifth response, a CP F-SEID is {10.X.X.1, 13579}; and/or a UP F-SEID is {192.168.X.10, 24680}.

In some other possible manners, in the identifier indicating the target session in the fifth response, a CP F-SEID is {192.168.X.2, first SEID}; and/or a UP F-SEID is {192.168.X.2, second SEID}.

In some other possible manners, in the identifier indicating the target session in the fifth response, a CP F-SEID is {192.168.X.2, first SEID}; and/or a UP F-SEID is {192.168.X.2, third SEID}.

In this application, the fifth response may be an existing message (for example, a PFCP session modification response or a PFCP session deletion response), or may be a new message.

M3: The first relay device sends a third response to the SMF, where the third response indicates that the session context of the target session in the UPF has been modified or deleted.

For specific content of the third response, refer to descriptions of the first response in step C2. Details are not described herein again.

In addition, in FIG. 4, for specific content of the first SEID to a fourth SEID, refer to descriptions of the first SEID to the fourth SEID in the method shown in FIG. 2.

An embodiment of this application provides a communication method. The method shows another example of the first possible manner in the method shown in FIG. 2. Refer to a flowchart shown in FIG. 5. The following describes a procedure of the method in detail by using an example in which a user plane network element is a UPF and a session management network element is an SMF.

S501: The SMF sends a first message to a first relay device. The first message includes indication information of the UPF, or there is a correspondence between a destination address in the first message and the UPF. The first message is for requesting to configure a session context for a target session in the UPF.

S502: The first relay device sends a second message to the UPF, where the second message is for requesting to configure the session context for the target session in the UPF.

For specific content of S501 and S502, refer to S301 and S302. Details are not described herein again.

S503: The UPF sends a sixth message to a second relay device. The sixth message includes an event related to the target session.

Optionally, the sixth message includes indication information of the SMF, or there is a correspondence between a destination address in the sixth message and the SMF.

For specific content of S503, refer to S203. Details are not repeated.

Optionally, when the event related to the target session needs to be reported, the UPF may send the sixth message to the second relay device. For example, when the UPF needs to report data traffic usage information of the target session to the SMF, or traffic detection starts for the target session, the UPF may determine that the event related to the target session needs to be reported, and send the sixth message.

In this application, the sixth message may be an existing message, or may be a new message. When the sixth message is an existing message, the sixth message is a PFCP session report request, for reporting the event related to the target session.

S504: The second relay device sends an eighth message to the SMF, where the eighth message includes the event related to the target session.

For specific content of S504, refer to S204. Details are not repeated.

In this application, the eighth message may be an existing message, or may be a new message. When the eighth message is an existing message, the eighth message is a PFCP session report request, for reporting the event related to the target session.

According to the method, the UPF may interact with the SMF via the first relay device, and may also interact with the SMF via the second relay device. In other words, signaling may be exchanged between the SMF and the UPF through a plurality of paths, so that a success rate of signaling transmission between the SMF and the UPF can be improved, reliability of communication between the SMF and the UPF is improved, and continuity of a service carried on the target session is ensured.

For example, when a connection between the SMF and the first relay device is interrupted, or a connection between the first relay device and the UPF is interrupted, the UPF may exchange signaling with the SMF via the second relay device. This can avoid that signaling transmission between the SMF and the UPF fails, and improve reliability of communication between the SMF and the UPF. In this way, the UPF may report, to the SMF, the event related to the target session, so that the SMF can manage the target session, thereby ensuring continuity of a service carried on the target session.

Optionally, before S501, the method shown in FIG. 5 further includes steps G1 and G2.

G1: The SMF sends a first PFCP association establishment request to the first relay device, where the first PFCP association establishment request is for requesting to establish a connection between the SMF and the UPF via the first relay device.

G2: The first relay device sends a third PFCP association establishment request to the UPF, where the third PFCP association establishment request is for requesting to establish the connection between the SMF and the UPF via the first relay device.

For specific content of G1 and G2, refer to steps A1 and A2. Details are not described herein again.

Optionally, before S503, the method shown in FIG. 5 further includes H1 and H2.

H1: The SMF sends a second PFCP association establishment request to the second relay device, where the second PFCP association establishment request is for requesting to establish a connection between the SMF and the UPF via the second relay device.

H2: The second relay device sends a fourth PFCP association establishment request to the UPF, where the fourth PFCP association establishment request is for requesting to establish the connection between the SMF and the UPF via the second relay device.

For specific content of H1 and H2, refer to steps B1 and B2. Details are not described herein again.

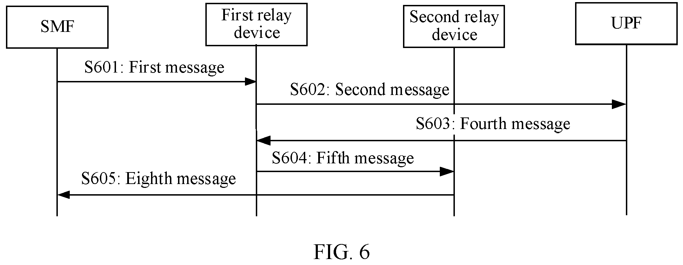

An embodiment of this application provides a communication method. The method shows another example of the second possible manner in the method shown in FIG. 2. Refer to a flowchart shown in FIG. 6. The following describes a procedure of the method in detail by using an example in which a session management network element is an SMF and a user plane network element is a UPF.

S601: The SMF sends a first message to a first relay device. The first message includes indication information of the UPF, or there is a correspondence between a destination address in the first message and the UPF. The first message is for requesting to configure a session context for a target session in the UPF.

S602: The first relay device sends a second message to the UPF, where the second message is for requesting to configure the session context for the target session in the UPF.

For specific content of S601 and S602, refer to S301 and S302. Details are not described herein again.

S603: The UPF sends a fourth message to the first relay device. The fourth message includes indication information of the SMF, or there is a correspondence between a destination address in the fourth message and the SMF. The fourth message includes an event related to the target session.

For specific content of S603, refer to S205 and S403. Details are not described herein again.

S604: The first relay device sends a fifth message to a second relay device, where the fifth message includes the event related to the target session, and there is a connection between the second relay device and the SMF.

For specific content of S604, refer to S206. Details are not repeated.

In this application, the fifth message may be an existing message, or may be a new message. When the fifth message is the existing message, the fifth message is a PFCP session report request, for reporting the event related to the target session.

S605: The second relay device sends an eighth message to the SMF, where the eighth message includes the event related to the target session.

For specific content of S605, refer to S207. Details are not described herein again.

According to the method, the UPF may interact with the SMF via the first relay device, and may also interact with the SMF via the first relay device and the second relay device. In other words, signaling may be exchanged between the SMF and the UPF through a plurality of paths, so that a success rate of signaling transmission between the SMF and the UPF can be improved, reliability of communication between the SMF and the UPF is improved, and continuity of a service carried on the target session is ensured.

For example, when a connection between the SMF and the first relay device is interrupted, the UPF may exchange signaling with the SMF via the first relay device and the second relay device. This can avoid that signaling transmission between the SMF and the UPF fails, and improve reliability of communication between the SMF and the UPF. In this way, the UPF may report, to the SMF, the event related to the target session, so that the SMF can manage the target session, thereby ensuring continuity of a service carried on the target session.

Optionally, after S602, the method shown in FIG. 6 further includes steps I1 and I2.

I1: The UPF sends a fourth response to the first relay device, where the fourth response indicates that the session context has been configured in the UPF.

I2: The first relay device sends a first response to the SMF, where the first response indicates that the session context has been configured in the UPF.

For specific content of I1 and I2, refer to steps C1 and C2. Details are not described herein again.

Optionally, before S601, the method shown in FIG. 6 further includes steps J1 and J2.

J1: The SMF sends a first PFCP association establishment request to the first relay device, where the first PFCP association establishment request is for requesting to establish a connection between the SMF and the UPF via the first relay device.

J2: The first relay device sends a third PFCP association establishment request to the UPF, where the third PFCP association establishment request is for requesting to establish the connection between the SMF and the UPF via the first relay device.

For specific content of J1 and J2, refer to steps A1 and A2. Details are not described herein again.

Optionally, before S604, the method shown in FIG. 6 further includes steps K1 and K2.

K1: The SMF sends a second PFCP association establishment request to the second relay device, where the second PFCP association establishment request is for requesting to establish a connection between the SMF and the UPF via the second relay device.

K2: The second relay device sends a fourth PFCP association establishment request to the UPF, where the fourth PFCP association establishment request is for requesting to establish the connection between the SMF and the UPF via the second relay device.

For specific content of K1 and K2, refer to steps B1 and B2. Details are not described herein again.

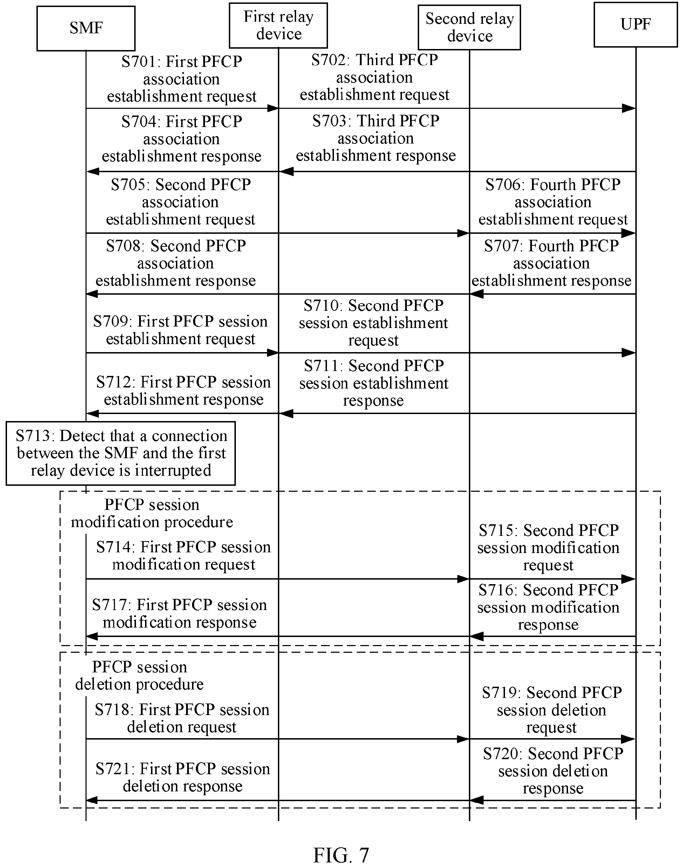

An embodiment of this application provides a communication method. The method shows still another example of the first possible manner in the method shown in FIG. 2. Refer to a flowchart shown in FIG. 7. The following describes a procedure of the method in detail by using an example in which a session management network element is an SMF and a user plane network element is a UPF.

S701: The SMF sends a first PFCP association establishment request to a first relay device, where the first PFCP association establishment request is for requesting to establish a connection between the SMF and the UPF via the first relay device.

For specific content of S701, refer to step A1. Details are not repeated.

Optionally, the first PFCP association establishment request further includes indication information of the SMF. For specific content of the indication information of the SMF, refer to descriptions of "the indication information of the second device" in S201. Only a second device is replaced with the SMF. Details are not described herein again.

S702: The first relay device sends a third PFCP association establishment request to the UPF, where the third PFCP association establishment request is for requesting to establish the connection between the SMF and the UPF via the first relay device.

For specific content of S702, refer to step A2. Details are not repeated.

Optionally, the third PFCP association establishment request further includes the indication information of the SMF.

In addition, after receiving the first PFCP association establishment request, the first relay device may store a correspondence between the indication information of the SMF and an address of the SMF.

S703: The UPF sends a third PFCP association establishment response to the first relay device.

The third PFCP association establishment response is a response message of the third PFCP association establishment request. A source address and a destination address in the third PFCP association establishment response are respectively an address of the UPF and a second address of the first relay device.

Optionally, the second PFCP association establishment response further includes indication information of the UPF and the indication information of the SMF. For specific content of the indication information of the UPF, refer to descriptions of "the indication information of the second device" in S201. Only the second device is replaced with the SMF. Details are not described herein again.

S704: The first relay device sends a first PFCP association establishment response to the SMF.

The first PFCP association establishment response is a response message of the first PFCP association establishment request. A source address and a destination address in the first PFCP association establishment response are respectively a first address of the first relay device and the address of the SMF.

For example, after receiving the third PFCP association establishment response, the first relay device may obtain the address of the SMF based on the indication information of the SMF or a correspondence between the destination address in the third PFCP association establishment response and the SMF; and then, the first relay device replaces the source address and the destination address in the third PFCP association establishment response with the first address of the first relay device and the address of the SMF respectively, to obtain the first PFCP association establishment response. For a specific manner in which the first relay device obtains the address of the SMF, refer to step C2. Details are not described herein again.

Optionally, the first PFCP association establishment response further includes the indication information of the UPF.

Through S701 to S704, the SMF establishes an association with the UPF via the first relay device.

S705: The SMF sends a second PFCP association establishment request to a second relay device, where the second PFCP association establishment request is for requesting to establish the connection between the SMF and the UPF via the second relay device.

For specific content of S705, refer to step B1. Details are not repeated.

Optionally, the second PFCP association establishment request further includes the indication information of the SMF.

S706: The second relay device sends a fourth PFCP association establishment request to the UPF, where the fourth PFCP association establishment request is for requesting to establish the connection between the SMF and the UPF via the second relay device.

For specific content of S706, refer to step B2. Details are not described herein again.

Optionally, the fourth PFCP association establishment request further includes the indication information of the SMF.

In addition, after receiving the second PFCP association establishment request, the second relay device may store a correspondence between the indication information of the SMF and the address of the SMF.

S707: The UPF sends a fourth PFCP association establishment response to the second relay device.

The fourth PFCP association establishment response is a response message of the fourth PFCP association establishment request. A source address and a destination address in the fourth PFCP association establishment response are respectively the address of the UPF and a fourth address of the second relay device.

Optionally, the fourth PFCP association establishment response further includes the indication information of the UPF and the indication information of the SMF.

S708: The second relay device sends a second PFCP association establishment response to the SMF.

The second PFCP association establishment response is a response message of the second PFCP association establishment request. A source address and a destination address in the second PFCP association establishment response are respectively a third address of the second relay device and the address of the SMF.

For example, after receiving the fourth PFCP association establishment response, the second relay device may obtain the address of the SMF based on the indication information of the SMF or a correspondence between the destination address in the fourth PFCP association establishment response and the SMF; and then, the second relay device replaces the source address and the destination address in the fourth PFCP association establishment response with the third address of the second relay device and the address of the SMF respectively, to obtain the second PFCP association establishment response. For specific content of obtaining the address of the SMF by the second relay device, refer to step C2. Only the first relay device is replaced with the second relay device, and the fourth response is replaced with the fourth PFCP association establishment response. Details are not described herein again.

Optionally, the second PFCP association establishment response further includes the indication information of the UPF.

Through S705 to S708, the SMF establishes the association with the UPF via the second relay device.

It should be understood that an execution sequence of S701 to S704 and S705 to S708 is not limited in this application.

S709: The SMF sends a first PFCP session establishment request to the first relay device, where the first PFCP session establishment request is for requesting to create a PFCP session context for a target session in the UPF.

The first PFCP session establishment request may be the first message in S201 and S301. For specific content of S709, refer to S201 and S301. Details are not repeated.

Optionally, an identifier indicating the target session in the first PFCP session establishment request may be a CP F-SEID, and the first PFCP session establishment request further includes the indication information of the SMF.

S710: The first relay device sends a second PFCP session establishment request to the UPF.

The second PFCP session establishment request may be the second message in S202 and S302. For specific content of S710, refer to S202 and S302. Details are not repeated.

Optionally, an identifier indicating the target session in the second PFCP session establishment request may be a CP F-SEID, and the second PFCP session establishment request further includes the indication information of the SMF.

S711: After the PFCP session context is successfully created, the UPF sends a second PFCP session establishment response to the first relay device.

The second PFCP session establishment response may be the fourth response in step C1. For specific content of S711, refer to step C1. Details are not repeated.

Optionally, an identifier indicating the target session in the second PFCP session establishment response may include the CP F-SEID and a UP F-SEID, or include the UP F-SEID.

S712: The first relay device sends a first PFCP session establishment response to the SMF.

The first PFCP session establishment response may be the first response in step C2. For specific content of S712, refer to step C2. Details are not repeated.

Optionally, an identifier indicating the target session in the first PFCP session establishment response may include the CP F-SEID and the UP F-SEID, or include the UP F-SEID.

S713: The SMF detects that a connection between the SMF and the first relay device is interrupted.

That a connection between the SMF and the first relay device is interrupted may include at least one of the following: a link between the SMF and the first relay device is interrupted, or the first relay device is faulty.

For specific content of S713, refer to Condition 1 in S203. Details are not described herein again.

In addition, an execution sequence of S705 to S708 and S709 to S713 is not limited in this application.

Optionally, after S713, the method includes a PFCP session modification procedure shown in S714 to S717, and/or a PFCP session deletion procedure shown in S718 to S721.

S714: The SMF sends a first PFCP session modification request to the second relay device, where the first PFCP session modification request is for requesting to modify the PFCP session context in the UPF.

The first PFCP session modification request may be the sixth message in S203. For specific content of S714, refer to S203 and S303. Details are not repeated.

Optionally, an identifier indicating the target session in the first PFCP session modification request may include the CP F-SEID and the UP F-SEID, or include the UP F-SEID.

In addition, the first PFCP session modification request may further include the indication information of the SMF.

S715: The second relay device sends a second PFCP session modification request to the UPF.

The second PFCP session modification request may be the eighth message in S204. For specific content of S715, refer to S204 and S304. Details are not repeated.

Optionally, an identifier indicating the target session in the second PFCP session modification request may include the CP F-SEID and the UP F-SEID, or include the UP F-SEID.

In addition, the second PFCP session modification request may further include the indication information of the SMF.

S716: After the PFCP session context is successfully modified, the UPF sends a second PFCP session modification response to the second relay device.

A source address and a destination address in the second PFCP session modification response are respectively the address of the UPF and the fourth address of the second relay device.

In some possible manners, the second PFCP session modification response further includes the indication information of the SMF. For specific content of the indication information of the SMF, refer to step C1. Details are not described herein again. In some other possible manners, there is a correspondence between the destination address in the second PFCP session modification response and the SMF. In this way, after receiving the second PFCP session modification response, the second relay device may determine the address of the SMF based on the indication information of the SMF or the correspondence between the destination address in the second PFCP session modification response and the SMF.

Optionally, the second PFCP session modification response further includes at least one of the following: the indication information of the UPF and an identifier indicating the target session. The identifier indicating the target session may include the CP F-SEID and the UP F-SEID.

S717: The second relay device sends a first PFCP session modification response to the SMF.

A source address and a destination address in the first PFCP session modification response are respectively the third address of the second relay device and the address of the SMF.

For example, after receiving the second PFCP session modification response, the second relay device may obtain the address of the SMF based on the indication information of the SMF or the correspondence between the destination address in the second PFCP session modification response and the SMF; and then, the second relay device replaces the source address and the destination address in the second PFCP session modification response with the third address of the second relay device and the address of the SMF respectively, to obtain the first PFCP session modification response. For specific content of obtaining the address of the SMF by the second relay device, refer to step C2. Only the first relay device is replaced with the second relay device, and the fourth response is replaced with the second PFCP session modification response. Details are not described herein again.

Optionally, an identifier indicating the target session in the first PFCP session modification response may include the CP F-SEID and the UP F-SEID.

S718: The SMF sends a first PFCP session deletion request to the second relay device, where the first PFCP session deletion request is for requesting to delete the PFCP session context in the UPF.

The first PFCP session deletion request may be the sixth message in S203 and S303. For specific content of S718, refer to S203 and S303. Details are not repeated.

Optionally, an identifier indicating the target session in the first PFCP session deletion request may include the CP F-SEID and the UP F-SEID, or include the UP F-SEID.

In addition, the first PFCP session deletion request may further include the indication information of the SMF.

S719: The second relay device sends a second PFCP session deletion request to the UPF, where the second PFCP session deletion request is for requesting to delete the PFCP session context in the UPF.

The second PFCP session deletion request may be the eighth message in S204 and S304. For specific content of S719, refer to S204 and S304. Details are not repeated.

Optionally, an identifier indicating the target session in the second PFCP session deletion request may include the CP F-SEID and the UP F-SEID, or include the UP F-SEID.

In addition, the second PFCP session deletion request may further include the indication information of the SMF.

S720: After the PFCP session context is successfully deleted, the UPF sends a second PFCP session deletion response to the second relay device.

A source address and a destination address in the second PFCP session deletion response are respectively the address of the UPF and the fourth address of the second relay device.

In some possible manners, the second PFCP session deletion response further includes the indication information of the SMF. In some other possible manners, there is a correspondence between the destination address in the second PFCP session deletion response and the SMF. In this way, after receiving the second PFCP session deletion response, the second relay device may determine the address of the SMF based on the indication information of the SMF or the correspondence between the destination address in the second PFCP session deletion response and the SMF.

Optionally, the second PFCP session deletion response further includes at least one of the following: the indication information of the UPF and an identifier indicating the target session. The identifier indicating the target session in the second PFCP session deletion response may include the CP F-SEID and the UP F-SEID.

S721: The second relay device sends a first PFCP session deletion response to the SMF.

A source address and a destination address in the second PFCP session deletion response are respectively the third address of the second relay device and the address of the SMF.

For example, after receiving the second PFCP session deletion response, the second relay device may obtain the address of the SMF based on the indication information of the SMF or the correspondence between the destination address in the second PFCP session deletion response and the SMF; and then, the second relay device replaces the source address and the destination address in the second PFCP session deletion response with the third address of the second relay device and the address of the SMF respectively, to obtain the first PFCP session deletion response. For specific content of obtaining the address of the SMF by the second relay device, refer to step C2. Only the first relay device is replaced with the second relay device, and the fourth response is replaced with the second PFCP session deletion response. Details are not described herein again.

Optionally, an identifier indicating the target session in the first PFCP session deletion response may include the CP F-SEID and the UP F-SEID.

According to the method, when detecting that the connection between the SMF and the first relay device is interrupted, the SMF may exchange signaling with the UPF via the second relay device. This can avoid that signaling transmission between the SMF and the UPF fails, and improve reliability of communication between the SMF and the UPF. In this way, the SMF may request to modify or delete the session context of the target session in the UPF, to manage the target session, and the session modification procedure or the session deletion procedure is completed, thereby ensuring continuity of a service carried on the target session.

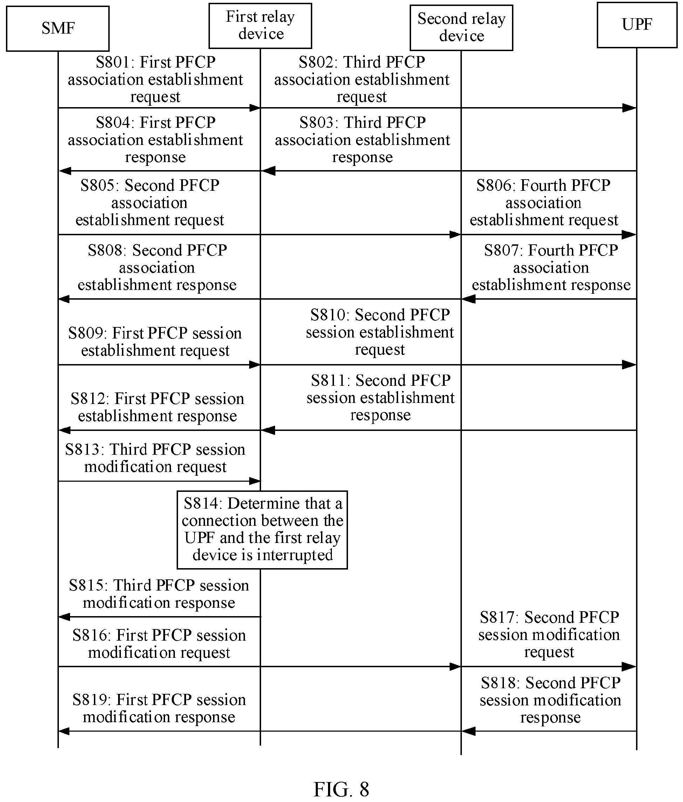

An embodiment of this application provides a communication method. The method shows still another example of the first possible manner in the method shown in FIG. 2. Refer to a flowchart shown in FIG. 8. The following describes a procedure of the method in detail by using an example in which a session management network element is an SMF and a user plane network element is a UPF.

S801: The SMF sends a first PFCP association establishment request to a first relay device, where the first PFCP association establishment request is for requesting to establish a connection between the SMF and the UPF via the first relay device.

S802: The first relay device sends a third PFCP association establishment request to the UPF, where the third PFCP association establishment request is for requesting to establish the connection between the SMF and the UPF via the first relay device.

S803: The UPF sends a third PFCP association establishment response to the first relay device.

S804: The first relay device sends a first PFCP association establishment response to the SMF.

S805: The SMF sends a second PFCP association establishment request to a second relay device, where the second PFCP association establishment request is for requesting to establish the connection between the SMF and the UPF via the second relay device.

S806: The second relay device sends a fourth PFCP association establishment request to the UPF, where the fourth PFCP association establishment request is for requesting to establish the connection between the SMF and the UPF via the second relay device.

S807: The UPF sends a fourth PFCP association establishment response to the second relay device.

S808: The second relay device sends a second PFCP association establishment response to the SMF.

S809: The SMF sends a first PFCP session establishment request to the first relay device, where the first PFCP session establishment request is for requesting to create a PFCP session context for a target session in the UPF.

S810: The first relay device sends a second PFCP session establishment request to the UPF.

S811: After the PFCP session context is successfully created, the UPF sends a second PFCP session establishment response to the first relay device.

S812: The first relay device sends a first PFCP session establishment response to the SMF.

For specific content of S801 to S812, refer to S701 to S712. Details are not described herein again.

S813: The SMF sends a third PFCP session modification request to the first relay device, where the third PFCP session modification request is for requesting to modify the PFCP session context in the UPF.

The third PFCP session modification request may be the fourth message in S205 and S403. For specific content of S813, refer to S205 and S403. Details are not repeated.

Optionally, an identifier indicating the target session in the third PFCP session modification request may include a CP F-SEID and a UP F-SEID, or include the UP F-SEID.

In addition, the third PFCP session modification request may further include indication information of the SMF.

S814: The first relay device determines that a connection between the UPF and the first relay device is interrupted.

For a manner in which the first relay device determines whether the connection between the UPF and the first relay device is interrupted, refer to Implementation 1 in S203. Details are not described herein again.

S815: The first relay device sends a third PFCP session modification response to the SMF, where the third PFCP session modification response includes indication information indicating that the connection between the UPF and the first relay device is interrupted.

The indication information may be the first indication in Condition 2 in S203. For specific content, refer to Condition 2. Details are not repeated.

In addition, the indication information may be a cause value "remote path failure"; or the indication information may be a flag bit "redirection", and the flag bit indicates the SMF to select another relay device to send the PFCP session modification request.

It should be understood that an execution sequence of S805 to S808 and S809 to S815 is not limited in this application. In other words, the SMF may first establish an association with the UPF via the second relay device, and then receive the indication information indicating that the connection between the UPF and the first relay device is interrupted; or the SMF may establish an association with the UPF via the second relay device after receiving the indication information indicating that the connection between the UPF and the first relay device is interrupted.

S816: The SMF sends a first PFCP session modification request to the second relay device, where the first PFCP session modification request is for requesting to modify the PFCP session context in the UPF.

S817: The second relay device sends a second PFCP session modification request to the UPF.

S818: After the PFCP session context is successfully modified, the UPF sends a second PFCP session modification response to the second relay device.

S819: The second relay device sends a first PFCP session modification response to the SMF.

For specific content of S816 to S819, refer to S714 to S717. Details are not described herein again.

Optionally, S813 to S819 are also applicable to a PFCP session deletion procedure. In this case, the session modification request in S813 to S819 may be replaced with a session deletion request, and the session modification response may be replaced with a session deletion response. In S818, after the PFCP session context is successfully deleted, the UPF sends a second PFCP session deletion response to the second relay device.

According to the method, when the connection between the first relay device and the UPF is interrupted, the SMF may exchange signaling with the UPF via the second relay device. This can avoid that signaling transmission between the SMF and the UPF fails, and improve reliability of communication between the SMF and the UPF. In this way, the SMF may request to modify or delete the session context of the target session in the UPF, to manage the target session, and a session modification procedure or the session deletion procedure is completed, thereby ensuring continuity of a service carried on the target session.

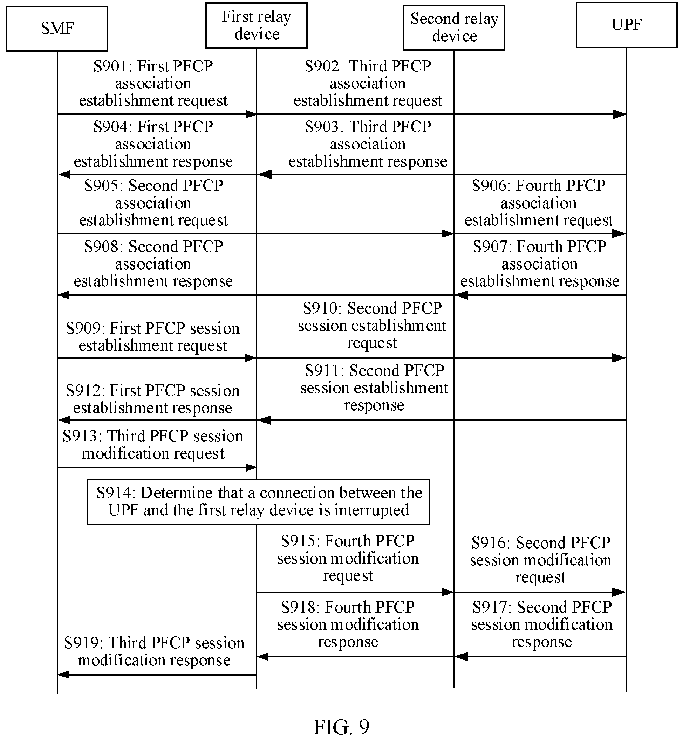

An embodiment of this application provides a communication method. The method shows still another example of the second possible manner in the method shown in FIG. 2. Refer to a flowchart shown in FIG. 9. The following describes a procedure of the method in detail by using an example in which a session management network element is an SMF and a user plane network element is a UPF.

S901: The SMF sends a first PFCP association establishment request to a first relay device, where the first PFCP association establishment request is for requesting to establish a connection between the SMF and the UPF via the first relay device.

S902: The first relay device sends a third PFCP association establishment request to the UPF, where the third PFCP association establishment request is for requesting to establish the connection between the SMF and the UPF via the first relay device.

S903: The UPF sends a third PFCP association establishment response to the first relay device.

S904: The first relay device sends a first PFCP association establishment response to the SMF.

S905: The SMF sends a second PFCP association establishment request to a second relay device, where the second PFCP association establishment request is for requesting to establish the connection between the SMF and the UPF via the second relay device.

S906: The second relay device sends a fourth PFCP association establishment request to the UPF, where the fourth PFCP association establishment request is for requesting to establish the connection between the SMF and the UPF via the second relay device.

S907: The UPF sends a fourth PFCP association establishment response to the second relay device.

S908: The second relay device sends a second PFCP association establishment response to the SMF.

S909: The SMF sends a first PFCP session establishment request to the first relay device, where the first PFCP session establishment request is for requesting to create a PFCP session context for a target session in the UPF.

S910: The first relay device sends a second PFCP session establishment request to the UPF.

S911: After the PFCP session context is successfully created, the UPF sends a second PFCP session establishment response to the first relay device.

S912: The first relay device sends a first PFCP session establishment response to the SMF.

S913: The SMF sends a third PFCP session modification request to the first relay device, where the third PFCP session modification request is for requesting to modify the PFCP session context in the UPF.

S914: The first relay device determines that a connection between the UPF and the first relay device is interrupted.

For specific content of S901 to S914, refer to S801 to S814. Details are not described herein again.

In addition, an execution sequence of S905 to S908 and S909 to S914 is not limited in this application.

S915: The first relay device sends a fourth PFCP session modification request to the second relay device, where the fourth PFCP session modification request is for requesting to modify the PFCP session context in the UPF.

The fourth PFCP session modification request may be the fifth message in S206 and S404. For specific content of S915, refer to S206 and S404. Details are not described herein again.

Optionally, an identifier indicating the target session in the fourth PFCP session modification request may include a CP F-SEID and a UP F-SEID, or include the UP F-SEID.

In addition, the fourth PFCP session modification request may further include indication information of the SMF.

S916: The second relay device sends a second PFCP session modification request to the UPF.

The second PFCP session modification request may be the eighth message in S207 and S405. For specific content of S916, refer to S207 and S405. Details are not described herein again.

Optionally, an identifier indicating the target session in the second PFCP session modification request may include the CP F-SEID and the UP F-SEID, or include the UP F-SEID.

In addition, the second PFCP session modification request may further include the indication information of the SMF.

S917: After the PFCP session context is successfully modified, the UPF sends a second PFCP session modification response to the second relay device.

For specific content of S917, refer to S716. Details are not described herein again.

S918: The second relay device sends a fourth PFCP session modification response to the first relay device.

A source address and a destination address in the fourth PFCP session modification response are respectively a third address of the second relay device and a first address of the first relay device.

For example, the second relay device may replace a source address and a destination address in the second PFCP session modification response with the third address of the second relay device and the first address of the first relay device respectively, to obtain the fourth PFCP session modification response.

In some possible manners, the fourth PFCP session modification response further includes the indication information of the SMF. In some other possible manners, there is a correspondence between the destination address in the fourth PFCP session modification response and the SMF.

Optionally, an identifier indicating the target session in the fourth PFCP session modification response may include the CP F-SEID and the UP F-SEID, or include the UP F-SEID.

S919: The first relay device sends a third PFCP session modification response to the SMF.

A source address and a destination address in the third PFCP session modification response are respectively the first address of the first relay device and an address of the SMF.

For example, after receiving the fourth PFCP session modification response, the first relay device may determine the address of the SMF based on the indication information of the SMF or the correspondence between the destination address in the fourth PFCP session modification response and the SMF, and replace the source address and the destination address in the fourth PFCP session modification response with the first address of the first relay device and the address of the SMF respectively, to obtain the third PFCP session modification response.

Optionally, an identifier indicating the target session in the third PFCP session modification response may include the CP F-SEID and the UP F-SEID, or include the UP F-SEID.

Optionally, S913 to S919 are also applicable to a PFCP session deletion procedure. In this case, the session modification request in S913 to S919 may be replaced with a session deletion request, and the session modification response may be replaced with a session deletion response. In S917, after the PFCP session context is successfully deleted, the UPF sends a second PFCP session deletion response to the second relay device.

According to the method, when the connection between the first relay device and the UPF is interrupted, the SMF may exchange signaling with the UPF via the first relay device and the second relay device. This can avoid that signaling transmission between the SMF and the UPF fails, and improve reliability of communication between the SMF and the UPF. In this way, the SMF may request to modify or delete the session context of the target session in the UPF, to manage the target session, and a session modification procedure or the session deletion procedure is completed, thereby ensuring continuity of a service carried on the target session.

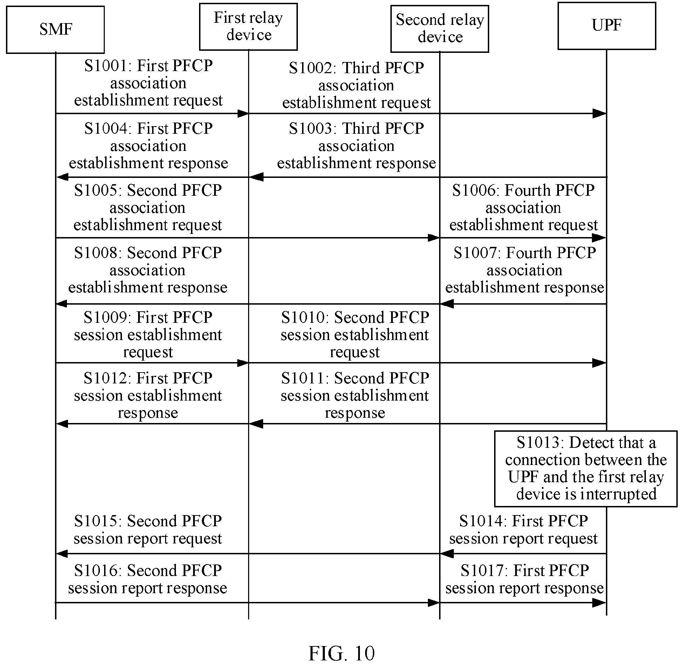

An embodiment of this application provides a communication method. The method shows still another example of the first possible manner in the method shown in FIG. 2. Refer to a flowchart shown in FIG. 10. The following describes a procedure of the method in detail by using an example in which a session management network element is an SMF and a user plane network element is a UPF.

S1001: The SMF sends a first PFCP association establishment request to a first relay device, where the first PFCP association establishment request is for requesting to establish a connection between the SMF and the UPF via the first relay device.

S1002: The first relay device sends a third PFCP association establishment request to the UPF, where the third PFCP association establishment request is for requesting to establish the connection between the SMF and the UPF via the first relay device.

S1003: The UPF sends a third PFCP association establishment response to the first relay device.

S1004: The first relay device sends a first PFCP association establishment response to the SMF.

S1005: The SMF sends a second PFCP association establishment request to a second relay device, where the second PFCP association establishment request is for requesting to establish the connection between the SMF and the UPF via the second relay device.

S1006: The second relay device sends a fourth PFCP association establishment request to the UPF, where the fourth PFCP association establishment request is for requesting to establish the connection between the SMF and the UPF via the second relay device.

S1007: The UPF sends a fourth PFCP association establishment response to the second relay device.

S1008: The second relay device sends a second PFCP association establishment response to the SMF.

S1009: The SMF sends a first PFCP session establishment request to the first relay device, where the first PFCP session establishment request is for requesting to create a PFCP session context for a target session in the UPF.

S1010: The first relay device sends a second PFCP session establishment request to the UPF.

S1011: After the PFCP session context is successfully created, the UPF sends a second PFCP session establishment response to the first relay device.

S1012: The first relay device sends a first PFCP session establishment response to the SMF.

For specific content of S1001 to S1012, refer to S701 to S712. Details are not described herein again.

S1013: The UPF detects that a connection between the UPF and the first relay device is interrupted.

That a connection between the UPF and the first relay device is interrupted may include at least one of the following: a link between the UPF and the first relay device is interrupted, or the first relay device is faulty.

For specific content of S1013, refer to Condition 1 in S203. Details are not described herein again.

In addition, an execution sequence of S1005 to S1008 and S1009 to S1013 is not limited in this application.

S1014: The UPF sends a first PFCP session report request to the second relay device, where the first PFCP session report request is for reporting an event related to the target session.

The first PFCP session report request may be the sixth message in S203 and S503. For specific content of S1014, refer to S203 and S503. Details are not repeated.

Optionally, an identifier indicating the target session in the first PFCP session report request may include a CP F-SEID and a UP F-SEID.

S1015: The second relay device sends a second PFCP session report request to the SMF.

The second PFCP session report request may be the eighth message in S204 and S504. For specific content of S1015, refer to S204 and S504. Details are not repeated.

Optionally, an identifier indicating the target session in the second PFCP session report request may include the CP F-SEID and the UP F-SEID.

S1016: The SMF sends a second PFCP session report response to the second relay device.

The SMF may identify, based on the identifier indicating the target session in the second PFCP session report request, the PFCP session context corresponding to the target session, and apply the reported event to the target session; and then, the SMF may send the second PFCP session report response to the second relay device.

Optionally, a source address and a destination address in the second PFCP session report response are an address of the SMF and a third address of the second relay device.

In some possible manners, the second PFCP session report response further includes indication information of the UPF. For specific content of the indication information of the UPF, refer to descriptions of the indication information of the second device in S201. Details are not described herein again. In some other possible manners, there is a correspondence between the destination address in the second PFCP session report response and the UPF. In this way, after receiving the second PFCP session report response, the second relay device may determine an address of the UPF based on the indication information of the UPF or the correspondence between the destination address in the second PFCP session report response and the UPF.

Optionally, an identifier indicating the target session in the second PFCP session report response may include the CP F-SEID and the UP F-SEID.

S1017: The second relay device sends a first PFCP session report response to the UPF.

Optionally, a source address and a destination address in the first PFCP session report response are respectively a fourth address of the second relay device and the address of the UPF.

For example, after receiving the second PFCP session report response, the second relay device may obtain the address of the UPF based on the indication information of the UPF or the correspondence between the destination address in the second PFCP session report response and the UPF; and then, the second relay device replaces the source address and the destination address in the second PFCP session report response with the fourth address of the second relay device and the address of the UPF respectively, to obtain the first PFCP session report response. For a manner in which the second relay device obtains the address of the UPF, refer to descriptions of "the first relay device determines the address of the second device based on the indication information of the second device" in S202. Only the first relay device is replaced with the second relay device. Details are not described herein again.

According to the method, when detecting that the connection between the first relay device and the UPF is interrupted, the UPF may exchange signaling with the SMF via the second relay device. This can avoid that signaling transmission between the SMF and the UPF fails, and improve reliability of communication between the SMF and the UPF. In this way, the UPF may report, to the SMF, the event related to the target session, so that the SMF can manage the target session, thereby ensuring continuity of a service carried on the target session.

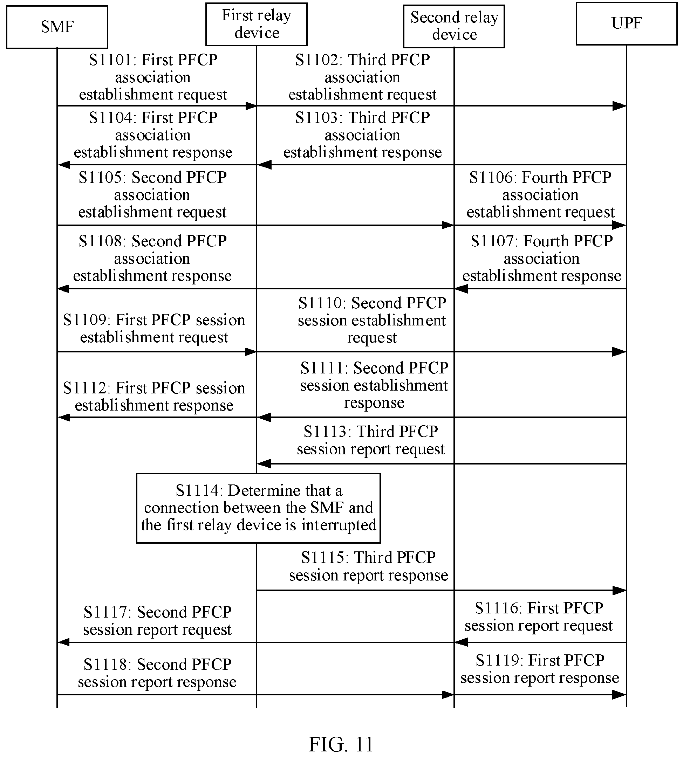

An embodiment of this application provides a communication method. The method shows still another example of the first possible manner in the method shown in FIG. 2. Refer to a flowchart shown in FIG. 11. The following describes a procedure of the method in detail by using an example in which a session management network element is an SMF and a user plane network element is a UPF.

S1101: The SMF sends a first PFCP association establishment request to a first relay device, where the first PFCP association establishment request is for requesting to establish a connection between the SMF and the UPF via the first relay device.

S1102: The first relay device sends a third PFCP association establishment request to the UPF, where the third PFCP association establishment request is for requesting to establish the connection between the SMF and the UPF via the first relay device.

S1103: The UPF sends a third PFCP association establishment response to the first relay device.

S1104: The first relay device sends a first PFCP association establishment response to the SMF.

S1105: The SMF sends a second PFCP association establishment request to a second relay device, where the second PFCP association establishment request is for requesting to establish the connection between the SMF and the UPF via the second relay device.

S1106: The second relay device sends a fourth PFCP association establishment request to the UPF, where the fourth PFCP association establishment request is for requesting to establish the connection between the SMF and the UPF via the second relay device.

S1107: The UPF sends a fourth PFCP association establishment response to the second relay device.

S1108: The second relay device sends a second PFCP association establishment response to the SMF.

S1109: The SMF sends a first PFCP session establishment request to the first relay device, where the first PFCP session establishment request is for requesting to create a PFCP session context for a target session in the UPF.

S1110: The first relay device sends a second PFCP session establishment request to the UPF.

S1111: After the PFCP session context is successfully created, the UPF sends a second PFCP session establishment response to the first relay device.

S1112: The first relay device sends a first PFCP session establishment response to the SMF.

For specific content of S1101 to S1112, refer to S701 to S712. Details are not described herein again.

S1113: The UPF sends a third PFCP session report request to the first relay device, where the third PFCP session report request is for reporting an event related to the target PDU session.

The third PFCP session report request may be the fourth message in S205 and S503. For specific content of S1113, refer to S205 and S503. Details are not described herein again.

S1114: The first relay device determines that a connection between the SMF and the first relay device is interrupted.

For a manner in which the first relay device determines whether the connection between the SMF and the first relay device is interrupted, refer to Implementation 1 in S203. Details are not described herein again.

S1115: The first relay device sends a third PFCP session report response to the UPF, where the third PFCP session report response includes indication information indicating that the connection between the SMF and the first relay device is interrupted.

The indication information may be the first indication in Condition 2 in S203. For specific content, refer to Condition 2. Details are not repeated.

The indication information may be a cause value "remote path failure"; or the indication information may be a flag bit "redirection", and the flag bit indicates the UPF to select another relay device to send the PFCP session report request.

It should be understood that an execution sequence of S1105 to S1108 and S1109 to S1115 is not limited in this application.

S1116: The UPF sends a first PFCP session report request to the second relay device, where the first PFCP session report request is for reporting an event related to the target session.

S1117: The second relay device sends a second PFCP session report request to the SMF.

S1118: The SMF sends a second PFCP session report response to the second relay device.

S1119: The second relay device sends a first PFCP session report response to the UPF.

For specific content of S1116 to S1119, refer to S1014 to S1017. Details are not described herein again.

According to the method, when the connection between the SMF and the first relay device is interrupted, the UPF may exchange signaling with the SMF via the second relay device. This can avoid that signaling transmission between the SMF and the UPF fails, and improve reliability of communication between the SMF and the UPF. In this way, the UPF may report, to the SMF, the event related to the target session, so that the SMF can manage the target session, thereby ensuring continuity of a service carried on the target session.

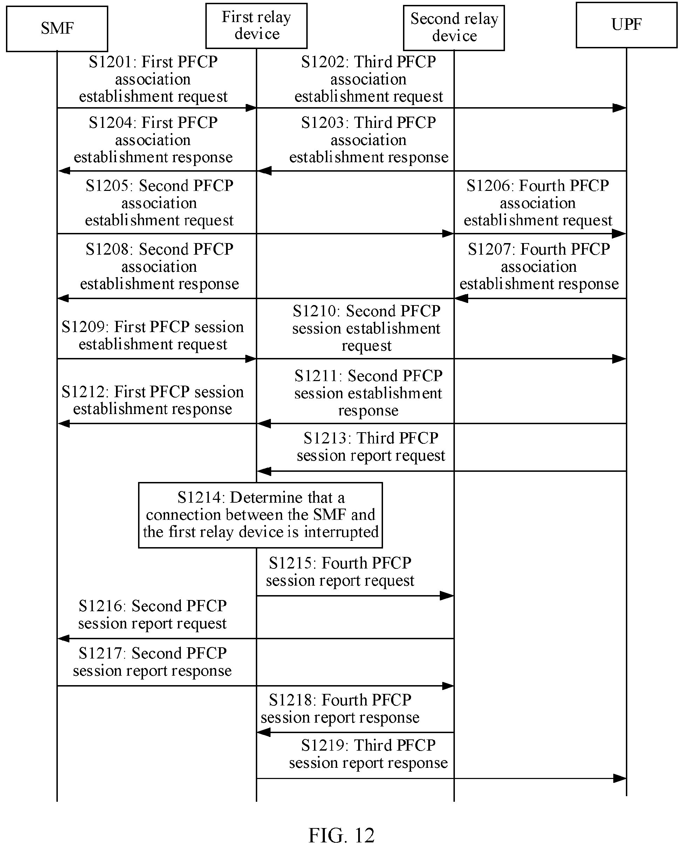

An embodiment of this application provides a communication method. The method shows still another example of the second possible manner in the method shown in FIG. 2. Refer to a flowchart shown in FIG. 12. The following describes a procedure of the method in detail by using an example in which a session management network element is an SMF and a user plane network element is a UPF.

S1201: The SMF sends a first PFCP association establishment request to a first relay device, where the first PFCP association establishment request is for requesting to establish a connection between the SMF and the UPF via the first relay device.

S1202: The first relay device sends a third PFCP association establishment request to the UPF, where the third PFCP association establishment request is for requesting to establish the connection between the SMF and the UPF via the first relay device.

S1203: The UPF sends a third PFCP association establishment response to the first relay device.

S1204: The first relay device sends a first PFCP association establishment response to the SMF.

S1205: The SMF sends a second PFCP association establishment request to a second relay device, where the second PFCP association establishment request is for requesting to establish the connection between the SMF and the UPF via the second relay device.

S1206: The second relay device sends a fourth PFCP association establishment request to the UPF, where the fourth PFCP association establishment request is for requesting to establish the connection between the SMF and the UPF via the second relay device.

S1207: The UPF sends a fourth PFCP association establishment response to the second relay device.

S1208: The second relay device sends a second PFCP association establishment response to the SMF.

S1209: The SMF sends a first PFCP session establishment request to the first relay device, where the first PFCP session establishment request is for requesting to create a PFCP session context for a target session in the UPF.

S1210: The first relay device sends a second PFCP session establishment request to the UPF.

S1211: After the PFCP session context is successfully created, the UPF sends a second PFCP session establishment response to the first relay device.

S1212: The first relay device sends a first PFCP session establishment response to the SMF.

S1213: The UPF sends a third PFCP session report request to the first relay device, where the third PFCP session report request is for reporting an event related to the target PDU session.

S1214: The first relay device determines that a connection between the SMF and the first relay device is interrupted.

For specific content of S1201 to S1214, refer to S1101 to S1114. Details are not described herein again.

In addition, an execution sequence of S1205 to S1208 and S1209 to S1214 is not limited in this application.

S1215: The first relay device sends a fourth PFCP session report request to the second relay device, where the fourth PFCP session report request is for reporting an event related to the target session.

The fourth PFCP session report request may be the fifth message in S206 and S604. For specific content of S1215, refer to S206 and S604. Details are not described herein again.

Optionally, an identifier indicating the target session in the fourth PFCP session report request may include a CP F-SEID and a UP F-SEID.

S1216: The second relay device sends a second PFCP session report request to the SMF.

The second PFCP session report request may be the eighth message in S207 and S605. For specific content of S1216, refer to S207 and S605. Details are not described herein again.

Optionally, an identifier indicating the target session in the second PFCP session report request may include the CP F-SEID and the UP F-SEID.

S1217: The SMF sends a second PFCP session report response to the second relay device.

For specific content of S1217, refer to S1016. Details are not described herein again.

S1218: The second relay device sends a fourth PFCP session report response to the first relay device.

A source address and a destination address in the fourth PFCP session report response are respectively a third address of the second relay device and a first address of the first relay device.

For example, the second relay device may replace a source address and a destination address in the second PFCP session report response with the third address of the second relay device and the first address of the first relay device respectively, to obtain the fourth PFCP session report response.

In some possible manners, the fourth PFCP session report response further includes indication information of the UPF. In some other possible manners, there is a correspondence between the destination address in the fourth PFCP session report response and the UPF.

Optionally, an identifier indicates the target session in the fourth PFCP session report response may include the CP F-SEID and the UP F-SEID.

S1219: The first relay device sends a third PFCP session report response to the UPF.

A source address and a destination address in the third PFCP session report response are respectively the first address of the first relay device and an address of the SMF.

For example, after receiving the fourth PFCP session report response, the first relay device may determine the address of the SMF based on the indication information of the UPF or the correspondence between the destination address in the fourth PFCP session report response and the UPF, and replace the source address and the destination address in the fourth PFCP session report response with the first address of the first relay device and the address of the SMF respectively, to obtain the third PFCP session report response.

Optionally, an identifier indicating the target session in the third PFCP session report response may include the CP F-SEID and the UP F-SEID.

According to the method, when the connection between the SMF and the first relay device is interrupted, the UPF may exchange signaling with the SMF via the first relay device and the second relay device. This can avoid that signaling transmission between the SMF and the UPF fails, and improve reliability of communication between the SMF and the UPF. In this way, the UPF may report, to the SMF, the event related to the target session, so that the SMF can manage the target session, thereby ensuring continuity of a service carried on the target session.

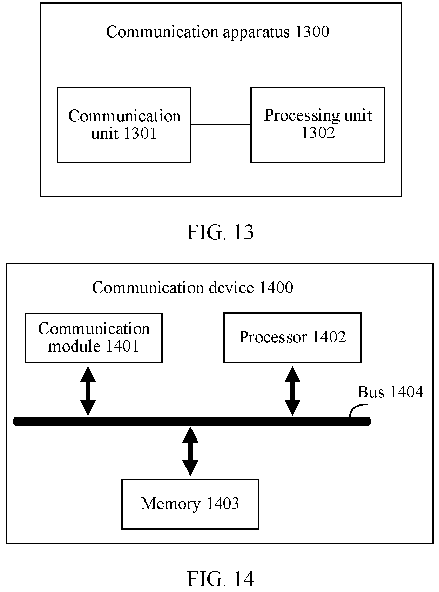

Based on a same technical concept, this application further provides a communication apparatus. A structure of the apparatus is shown in FIG. 13, and includes a communication unit 1301 and a processing unit 1302. The communication apparatus 1300 may be used in the SMF or the UPF in the communication system shown in FIG. 1A, or the SMF, the UPF, or the relay device in the communication system shown in FIG. 1B, and may implement the communication methods provided in the foregoing embodiments and examples of this application. The following describes functions of the units in the apparatus 1300.

The communication unit 1301 is configured to: receive and send data. The communication unit 1301 may be implemented via a physical interface, a communication module, a communication interface, or an input/output interface. The communication apparatus 1300 may be connected to a network cable or a cable via the communication unit, to establish a physical connection to another device.

The processing unit 1302 may be configured to support the communication apparatus 1300 in performing processing actions in the foregoing method embodiments. The processing unit 1302 may be implemented via a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a transistor logic device, a hardware component, or any combination thereof. The general-purpose processor may be a microprocessor, or may be any regular processor.

In an implementation, the communication apparatus 1300 is used in the first relay device in the embodiment of this application shown in any one of FIG. 2 to FIG. 12. The following describes a specific function of the processing unit 1302 in this implementation.

The processing unit 1302 is configured to: receive a first message from a first device via the communication unit 1301, where the first message includes indication information of a second device, or there is a correspondence between a destination address in the first message and the second device; and send a second message to the second device based on the first message via the communication unit 1301, where the first device is a session management network element, and the second device is a user plane network element; or the first device is the user plane network element, and the second device is the session management network element.

Optionally, a source address and the destination address in the first message are respectively an address of the first device and a first address of the first relay device; and a source address and a destination address in the second message are respectively a second address of the first relay device and an address of the second device.

Optionally, the first message includes a first identifier, and the second message includes a second identifier; or the first message includes the first identifier, and the second message includes the first identifier and the second identifier. The first relay device stores a correspondence between the first identifier and the second identifier, the first identifier is an identifier allocated by the first device to a target session, and the second identifier is an identifier that is allocated by the first relay device to the target session and that corresponds to the first identifier.

Optionally, the first message includes a third identifier, the third identifier is an identifier that is allocated by the first relay device to the target session and that corresponds to a fourth identifier, and the fourth identifier is an identifier allocated by the second device to the target session; and the second message includes the fourth identifier.

Optionally, the processing unit 1302 is specifically configured to send a first indication to the first device via the communication unit 1301, where the first indication indicates that a connection between the first relay device and the second device is interrupted.

Optionally, the processing unit 1302 is specifically configured to send the first indication to the first device via the communication unit 1301 after receiving a third message from the first device, where the third message includes the indication information of the second device, or there is a correspondence between a destination address in the third message and the second device.

Optionally, the processing unit 1302 is specifically configured to: receive a fourth message from the first device via the communication unit 1301, where the fourth message includes the indication information of the second device, or there is a correspondence between a destination address in the fourth message and the second device; and when a connection between the first relay device and the second device is interrupted, send a fifth message to a second relay device based on the fourth message via the communication unit 1301, where the fifth message includes the indication information of the second device, or there is a correspondence between a destination address in the fifth message and the second device. The second relay device is configured to transmit a message between the first device and the second device.

Optionally, a source address and the destination address in the fourth message are respectively the address of the first device and the first address of the first relay device; and a source address and the destination address in the fifth message are respectively the first address of the first relay device and a third address of the second relay device.

Optionally, the fourth message includes the first identifier, and the fifth message includes the second identifier; or the fourth message includes the first identifier, and the fifth message includes the first identifier and the second identifier. The first identifier is an identifier allocated by the first device to the target session, and the second identifier is an identifier that is allocated by the first relay device to the target session and that corresponds to the first identifier.

Optionally, the fourth message includes the third identifier, the third identifier is the identifier that is allocated by the first relay device to the target session and that corresponds to the fourth identifier, and the fourth identifier is the identifier allocated by the second device to the target session; and the fifth message includes the third identifier. The processing unit 1302 is specifically configured to send, to the second relay device via the communication unit 1301, information indicating a correspondence between the third identifier and the fourth identifier.

Optionally, the first message includes a fifth identifier, the fifth identifier is an identifier that is allocated by a third relay device to the target session and that corresponds to the fourth identifier, and the fourth identifier is the identifier allocated by the second device to the target session; and the second message includes the fourth identifier. The processing unit 1302 is specifically configured to obtain, from the third relay device via the communication unit 1301, information indicating a correspondence between the fifth identifier and the fourth identifier.

In still another implementation, the communication apparatus 1300 is used in the first device in the embodiment of this application shown in FIG. 2, or is used in the SMF or the UPF in the embodiment of this application shown in any one of FIG. 3 to FIG. 12. The following describes a specific function of the processing unit 1302 in this implementation.

The processing unit 1302 is configured to send a first message to a first relay device via the communication unit 1301, where the first message includes indication information of a second device, or there is a correspondence between a destination address in the first message and the second device. The first relay device is configured to transmit a message between the first device and the second device, where the first device is a session management network element, and the second device is a user plane network element; or the first device is the user plane network element, and the second device is the session management network element.

Optionally, the processing unit 1302 is specifically configured to send a sixth message to a second relay device via the communication unit 1301, where the sixth message includes the indication information of the second device, or there is a correspondence between a destination address in the sixth message and the second device. The second relay device is configured to transmit a message between the first device and the second device.

Optionally, the processing unit 1302 is specifically configured to detect, before sending the sixth message to the second relay device, that a connection between the first device and the first relay device is interrupted.

Optionally, the processing unit 1302 is specifically configured to receive a first indication from the first relay device via the communication unit 1301 before sending the sixth message to the second relay device, where the first indication indicates that a connection between the first relay device and the second device is interrupted.

Optionally, the processing unit 1302 is specifically configured to: send a third message to the first relay device via the communication unit 1301 before receiving the first indication from the first relay device, where the third message includes indication information of the second device, or there is a correspondence between a destination address in the third message and the second device.

Optionally, the processing unit 1302 is specifically configured to receive a seventh message from the first relay device via the communication unit 1301 before sending the first message to the first relay device, where the seventh message includes a third identifier and a fourth identifier, or the seventh message includes the third identifier; the third identifier is an identifier that is allocated by the first relay device to a target session and that corresponds to the fourth identifier, and the fourth identifier is an identifier allocated by the second device to the target session; and the first message includes the third identifier.

It needs to be noted that, in the foregoing embodiment of this application, module division is an example, is merely logical function division, and may be other division during actual implementation. In addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication device shown in FIG. 14, which may be configured to perform related steps in the foregoing method embodiments. The communication device may be used in the SMF or the UPF in the communication system shown in FIG. 1A, or the SMF, the UPF, or the relay device in the communication system shown in FIG. 1B, may implement the communication methods provided in the foregoing embodiments and examples of this application, and has a function of the communication apparatus shown in FIG. 13. Refer to FIG. 14. The communication device 1400 includes a communication module 1401, a processor 1402, and a memory 1403. The communication module 1401, the processor 1402, and the memory 1403 are connected to each other.

Optionally, the communication module 1401, the processor 1402, and the memory 1403 are connected to each other via a bus 1404. The bus 1404 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 14, but this does not mean that there is only one bus or only one type of bus.

The communication module 1401 is configured to: receive and send data, to implement communication and interaction with another device. For example, the communication module 1401 may be implemented via a physical interface, a communication module, a communication interface, or an input/output interface.

The processor 1402 may be configured to support the communication device 1400 in performing processing actions in the foregoing method embodiments. When the communication device 1400 is configured to implement the foregoing method embodiments, the processor 1402 may be further configured to implement a function of the processing unit 1302. The processor 1402 may be a CPU, or may be another general-purpose processor, a DSP, an ASIC, an FPGA or another programmable logic device, a transistor logic device, a hardware component, or any combination thereof. The general-purpose processor may be a microprocessor, or may be any regular processor.

In an implementation, the communication device 1400 is used in the first relay device in the embodiment of this application shown in any one of FIG. 2 to FIG. 12. The processor 1402 is specifically configured to: receive a first message from a first device via the communication module 1401, where the first message includes indication information of a second device, or there is a correspondence between a destination address in the first message and the second device; and send a second message to the second device based on the first message via the communication module 1401, where the first device is a session management network element, and the second device is a user plane network element; or the first device is the user plane network element, and the second device is the session management network element.

In another implementation, the communication device 1400 is used in the first device in the embodiment of this application shown in FIG. 2, or is used in the SMF or the UPF in the embodiment of this application shown in any one of FIG. 3 to FIG. 12. The processor 1402 is specifically configured to send a first message to a first relay device via the communication module 1401, where the first message includes indication information of a second device, or there is a correspondence between a destination address in the first message and the second device. The first relay device is configured to transmit a message between the first device and the second device, where the first device is a session management network element, and the second device is a user plane network element; or the first device is the user plane network element, and the second device is the session management network element.

For a specific function of the processor 1402, refer to descriptions in the communication methods provided in the foregoing embodiments and examples of this application, and descriptions of specific functions of the communication apparatus 1300 in the embodiment of this application shown in FIG. 13. Details are not described herein again.

The memory 1403 is configured to store program instructions, data, and the like. Specifically, the program instructions may include program code, and the program code includes computer operation instructions. The memory 1403 may include a RAM, and may further include a non-volatile memory (non-volatile memory), for example, at least one magnetic disk storage. The processor 1402 executes the program instructions stored in the memory 1403, and implements the foregoing functions by using the data stored in the memory 1403, to implement the communication methods provided in the foregoing embodiments of this application.

It may be understood that the memory 1403 in FIG. 14 in this application may be a volatile memory or a non-volatile memory, or may include both the volatile memory and the non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and serves as an external cache. By way of example and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the systems and methods described in this specification includes but is not limited to these and any memory of another proper type.

Based on the foregoing embodiments, an embodiment of this application further provides a computer program. When the computer program is run on a computer, the computer is enabled to perform the methods provided in the foregoing embodiments.

Based on the foregoing embodiments, an embodiment of this application further provides a computer-readable storage medium. The computer-readable storage medium stores a computer program, and when the computer program is executed by a computer, the computer is enabled to perform the methods provided in the foregoing embodiments.

The storage medium may be any usable medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by the computer.

Based on the foregoing embodiments, an embodiment of this application further provides a chip. The chip is configured to read a computer program stored in a memory, to implement the methods provided in the foregoing embodiments.

Based on the foregoing embodiments, an embodiment of this application provides a chip system. The chip system includes: a processor, configured to support a computer apparatus in implementing functions related to devices in the foregoing embodiments. In a possible design, the chip system further includes a memory, and the memory is configured to store a program and data that are necessary for the computer apparatus. The chip system may include a chip, or may include a chip and another discrete device.

In conclusion, embodiments of this application provide a communication method, apparatus, and device. In the method, after receiving a first message from a first device, a first relay device may send a second message to a second device based on the first message. The first message includes indication information of the second device, or there is a correspondence between a destination address in the first message and the second device. The first device is a session management network element, and the second device is a user plane network element; or the first device is the user plane network element, and the second device is the session management network element. In this solution, the session management network element may interact with the user plane network element via the first relay device, so that reliability of communication between the session management network element and the user plane network element can be improved.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that persons skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, applied to a first relay device, and comprising:
receiving a first message from a first device, wherein the first message comprises indication information of a second device, or there is a correspondence between a destination address in the first message and the second device; and
sending a second message to the second device based on the first message, wherein
the first device is a session management network element, and the second device is a user plane network element; or the first device is the user plane network element, and the second device is the session management network element.

2. The method according to claim 1, wherein
a source address and the destination address in the first message are respectively an address of the first device and a first address of the first relay device; and
a source address and a destination address in the second message are respectively a second address of the first relay device and an address of the second device.

3. The method according to claim 1 or 2, wherein
the first message comprises a first identifier, and the second message comprises a second identifier; or
the first message comprises the first identifier, and the second message comprises the first identifier and the second identifier, wherein
the first relay device stores a correspondence between the first identifier and the second identifier, the first identifier is an identifier allocated by the first device to a target session, and the second identifier is an identifier that is allocated by the first relay device to the target session and that corresponds to the first identifier.

4. The method according to any one of claims 1 to 3, wherein
the first message comprises a third identifier, the third identifier is an identifier that is allocated by the first relay device to the target session and that corresponds to a fourth identifier, and the fourth identifier is an identifier allocated by the second device to the target session; and
the second message comprises the fourth identifier.

5. The method according to any one of claims 1 to 4, wherein the method further comprises:
sending a first indication to the first device, wherein the first indication indicates that a connection between the first relay device and the second device is interrupted.

6. The method according to claim 5, wherein the sending a first indication to the first device comprises:
sending the first indication to the first device after receiving a third message from the first device, wherein the third message comprises the indication information of the second device, or there is a correspondence between a destination address in the third message and the second device.

7. The method according to any one of claims 1 to 4, wherein the method further comprises:
receiving a fourth message from the first device, wherein the fourth message comprises the indication information of the second device, or there is a correspondence between a destination address in the fourth message and the second device; and
when a connection between the first relay device and the second device is interrupted, sending a fifth message to a second relay device based on the fourth message, wherein the fifth message comprises the indication information of the second device, or there is a correspondence between a destination address in the fifth message and the second device; and the second relay device is configured to transmit a message between the first device and the second device.

8. The method according to claim 7, wherein
a source address and the destination address in the fourth message are respectively the address of the first device and the first address of the first relay device; and
a source address and the destination address in the fifth message are respectively the first address of the first relay device and a third address of the second relay device.

9. The method according to claim 7 or 8, wherein
the fourth message comprises the first identifier, and the first identifier is the identifier allocated by the first device to the target session; and the fifth message comprises the second identifier, and the second identifier is the identifier that is allocated by the first relay device to the target session and that corresponds to the first identifier; or
the fourth message comprises the first identifier, and the fifth message comprises the first identifier and the second identifier.

10. The method according to any one of claims 7 to 9, wherein
the fourth message comprises the third identifier, the third identifier is the identifier that is allocated by the first relay device to the target session and that corresponds to the fourth identifier, and the fourth identifier is the identifier allocated by the second device to the target session; and the fifth message comprises the third identifier; and
the method further comprises: sending, to the second relay device, information indicating a correspondence between the third identifier and the fourth identifier.

11. The method according to any one of claims 1 to 3, and 5 to 10, wherein
the first message comprises a fifth identifier, the fifth identifier is an identifier that is allocated by a third relay device to the target session and that corresponds to the fourth identifier, and the fourth identifier is the identifier allocated by the second device to the target session; and the second message comprises the fourth identifier; and
the method further comprises:
obtaining, from the third relay device, information indicating a correspondence between the fifth identifier and the fourth identifier.

12. A communication method, applied to a first device, and comprising:
sending a first message to a first relay device, wherein the first message comprises indication information of a second device, or there is a correspondence between a destination address in the first message and the second device; and the first relay device is configured to transmit a message between the first device and the second device, wherein
the first device is a session management network element, and the second device is a user plane network element; or the first device is the user plane network element, and the second device is the session management network element.

13. The method according to claim 12, wherein after the sending a first message to a first relay device, the method further comprises:
sending a sixth message to a second relay device, wherein the sixth message comprises the indication information of the second device, or there is a correspondence between a destination address in the sixth message and the second device; and the second relay device is configured to transmit a message between the first device and the second device.

14. The method according to claim 12 or 13, wherein before the sending a sixth message to a second relay device, the method further comprises:
detecting that a connection between the first device and the first relay device is interrupted.

15. The method according to claim 12 or 13, wherein before the sending a sixth message to a second relay device, the method further comprises:
receiving a first indication from the first relay device, wherein the first indication indicates that a connection between the first relay device and the second device is interrupted.

16. The method according to claim 15, wherein before the receiving a first indication from the first relay device, the method further comprises:
sending a third message to the first relay device, wherein the third message comprises the indication information of the second device, or there is a correspondence between a destination address in the third message and the second device.

17. The method according to any one of claims 12 to 16, wherein
before the sending a first message to a first relay device, the method further comprises: receiving a seventh message from the first relay device, wherein the seventh message comprises a third identifier and a fourth identifier, or the seventh message comprises the third identifier; and the third identifier is an identifier that is allocated by the first relay device to a target session and that corresponds to the fourth identifier, and the fourth identifier is an identifier allocated by the second device to the target session; and
the first message comprises the third identifier.

18. A communication apparatus, comprising:
a communication unit, configured to: receive and send data; and
a processing unit, configured to perform the method according to any one of claims 1 to 17 via the communication unit.

19. A communication device, comprising at least one processing element and at least one storage element, wherein the at least one storage element is configured to store a program and data, and the at least one processing element is configured to: read and execute the program and the data that are stored in the storage element, to perform the method according to any one of claims 1 to 17.

20. A computer-readable storage medium, wherein a computer program is stored on the computer-readable storage medium, and when the computer program is run on a computer, the computer is enabled to perform the method according to any one of claims 1 to 17.

21. A chip, wherein the chip is coupled to a memory, and the chip reads a computer program stored in the memory, to perform the method according to any one of claims 1 to 17.
